(19) Europäisches Patentamt / European Patent Office / Office européen des brevets

(11) **EP 4 017 919 B1**

(12) **EUROPEAN PATENT SPECIFICATION**

(45) Date of publication and mention of the grant of the patent:
**14.06.2023  Bulletin 2023/24**

(21) Application number: **20757904.6**

(22) Date of filing: **20.08.2020**

(51) International Patent Classification (IPC):
**C08L 25/12** *(2006.01)*    **C08L 55/02** *(2006.01)*
**C08L 53/02** *(2006.01)*    **C08K 3/22** *(2006.01)*
**F25D 23/06** *(2006.01)*

(52) Cooperative Patent Classification (CPC):
(C-Sets available)
**C08L 25/12; F25D 23/066;** C08K 9/04;
C08K 2003/2241; C08L 55/02; C08L 2201/08;
C08L 2203/30; C08L 2205/03            (Cont.)

(86) International application number:
**PCT/EP2020/073309**

(87) International publication number:
**WO 2021/032827 (25.02.2021 Gazette 2021/08)**

(54) **ABS MOLDING COMPOSITION FOR SHEET EXTRUSION AND THERMOFORMING WITH HIGH ESCR, HIGH COLOR AND THERMAL STABILITY AND LOW TENDENCY TO DELAMINATION**

ABS-FORMMASSE ZUM FOLIENEXTRUDIEREN UND THERMOFORMEN MIT HOHER SPANNUNGSRISSBESTÄNDIGKEIT, HOHER FARB- UND THERMISCHER STABILITÄT UND GERINGER NEIGUNG ZUR DELAMINIERUNG

COMPOSITION DE MOULAGE ABS POUR EXTRUSION ET THERMOFORMAGE DE FEUILLE AVEC UN ESCR ÉLEVÉ, UNE COLORATION ÉLEVÉE, UNE STABILITÉ THERMIQUE ÉLEVÉE ET UNE FAIBLE TENDANCE AU DÉLAMINAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.08.2019  EP 19192844**

(43) Date of publication of application:
**29.06.2022  Bulletin 2022/26**

(73) Proprietor: **INEOS Styrolution Group GmbH 60325 Frankfurt (DE)**

(72) Inventors:
- **NIESSNER, Norbert**
  **67159 Friedelsheim (DE)**
- **MICHELS, Gisbert**
  **51375 Leverkusen (DE)**
- **MICHAELIS DE VASCONCELLOS, Janna**
  **45549 Sprockhövel (DE)**
- **MADHAV, Shridhar**
  **Vadodara 390002 (IN)**
- **GEVARIA, Kirit**
  **Vadodara 390008 (IN)**
- **BHAVSAR, Pratik**
  **Vadodara Gujarat 391410 (IN)**
- **AHN, SangJun**
  **Seoul Seoul 05658 (KR)**

(74) Representative: **Jacobi, Markus Alexander Patentanwälte Isenbruck Bösl Hörschler PartG mbB Eastsite One Seckenheimer Landstrasse 4 68163 Mannheim (DE)**

(56) References cited:
WO-A1-2009/004018    WO-A1-2017/182435
CN-A- 107 043 516    DE-A1-102005 046 818
JP-A- H0 841 285     KR-A- 20140 086 773
US-A1- 2008 093 578

EP 4 017 919 B1

(52) Cooperative Patent Classification (CPC): (Cont.)

C-Sets
**C08L 25/12, C08L 55/02, C08L 53/02, C08K 3/22,
C08K 3/22, C08K 3/36;
C08L 25/12, C08L 55/02, C08L 53/02, C08K 9/02**

C-Sets

**Description**

The invention is directed to ABS molding compositions that exhibit high environmental stress crack resistance (ESCR) properties in the presence of foam blowing agents, such as hydrocarbons or chlorofluoro-olefins (CFO), as well as a high color and thermal stability and a low tendency to delamination. The invention further deals with the use for sheet extrusion and thermoforming, in particular for household applications, such as inner liner in cooling apparatuses.

For thermoformed equipment liners e.g. of refrigerators, styrene copolymers, in particular acrylonitrile-butadiene-styrene resins (ABS), are often chosen for the balance of properties: strength, toughness (impact resistance), appearance (gloss and color), chemical resistance, processability, and price. Sheet extrusion grades of ABS provide deep draw capability for thermoforming operations, strength and toughness for durability in assembly and use, high gloss, stain and chemical resistance to items such as food.

The refrigeration industry uses polyurethane foam for heat insulation between the outer metal cabinet and the inner plastic liner. The polyurethane requires a blowing agent to generate the foam. The choice of a blowing agent is a complicated matter that depends on many factors including thermal conductivity, cost, flammability, toxicity, and environmental factors such as ozone depletion and global warming potential.

When used as refrigerator liners, the ABS resin is also exposed to foamed-in-place insulation during assembly. Foamed-in-place insulation typically generates a rush of chemical blowing agent (one chemical or mixtures of different chemicals) so as to foam the insulating material (e.g. polyurethane). As ABS liners are exposed to the blowing agent, the ABS resin has to be designed and composed in a way that it provides chemical resistance against the applied blowing agent. Otherwise it will degrade the ABS material when getting in contact with the liner, causing it to crack.

Components with very large dimension and overall depth are quite difficult to mold using a normal injection molding machine and thus in such cases a thermoforming process is employed. For such applications sheets are extruded using ABS molding compositions with specifically lower melt flow index and very high melt strength, in addition to the required mechanical properties. Resistance to delamination and a high chemical resistance, in particular a high environmental stress crack resistance, are additional requirements for household applications like refrigerator liners.

WO 2000/36010 discloses ABS molding compositions for sheet extrusion and thermoforming. Exemplified compositions consist of 28.5/29.4 wt.-% of an ABS graft copolymer (A), 66.5/68.6 wt.-% of a SAN-copolymer (B) and 5/2 wt.-% of a linear S-(S/B)-S styrene-butadiene block copolymer (C) composed of at least one polystyrene hard block S and at least one elastomeric styrene/butadiene-copolymer block (S/B). Graft copolymer (A) - obtained by emulsion polymerization and by agglomeration of the butadiene rubber latex using an acrylate copolymer - has a mono-modal particle size of 150 to 350 nm. Molding compositions comprising pigments such as titanium dioxide and their use for refrigerator inliners are not disclosed.

WO 2009/004018 describes ABS molding compositions for refrigerator inliners comprising 75 to 99 wt.-% SAN-copolymer A, 0 to 60 wt.-%, preferably 1 to 30 wt.-%, ABS graft rubber copolymer B and 1 to 10 wt.-%, preferably 1 to 5 wt.-%, of a thermoplastic SBS block copolymer C. Graft rubber copolymer B can be obtained by emulsion polymerization of styrene and acrylonitrile (AN content of graft shell 15 to 25 wt.-%) in the presence of a polybutadiene rubber having a weight average particle size distribution $d_{50}$ of 90 +/- 25 nm). Blends (weight ratio 97/3) composed of Terluran® (SAN/ABS mixture) and Styroflex® (elastomeric SBS block copolymer, 33 wt.-% diene) show an improved environmental stress crack resistance (ESCR). Specific molding compositions comprising titanium dioxide are not disclosed.

WO 2017/182435 discloses ABS molding compositions for use as inliners for cooling apparatuses comprising 10 to 35 wt.-% ABS graft rubber copolymer (A) obtained by emulsion polymerization, 50 to 70 wt.-% SAN copolymer (B), 4 to 20 wt.-% SBC block copolymer (C) comprising two vinylaromatic polymer blocks S and at least one random elastomeric butadiene/styrene copolymer block B/S wherein the proportion of the hard phase formed from the blocks S is 5 to 40 wt.-%, and 4 to 20 wt.-% ABS graft rubber copolymer D obtained by mass polymerization. ABS graft rubber copolymer (A) is obtained by emulsion polymerization of styrene and acrylonitrile in presence of a polybutadiene rubber having a weight average particle diameter $D_w$ 0.15 $\mu$m to 0.80 $\mu$m. Comparative example 2 shows a ternary blend made from (A), (B) and (C) (weight ratio: 23/69/8) comprising further 5.5 pbw titanium dioxide. In said blend a bimodal (0.25 $\mu$m/0.55 $\mu$m) graft rubber copolymer A is used (graft content: 48 wt.-%, AN content: 29 wt.-%).

The mechanical properties, the tendency to delamination, the thermal and color stability of the afore-mentioned ABS molding compositions are still in need for improvement.

Therefore, it is an object of the invention to provide an ABS molding composition for sheet extrusion and thermoforming applications, which have a low tendency to delamination, an improved thermal and color stability as well as good mechanical properties such as a high tensile and impact strength along with a high melt strength. A further object of the invention is to provide an ABS molding composition suitable for inner liners of cooling apparatuses having a high chemical resistance, in particular a high environmental stress crack resistance (ESCR) in the presence of foam blowing agents such as hydrocarbons or chlorofluoro-olefins (CFO). Moreover, it is desirable that the novel ABS molding composition has only a very low migration of residual monomers in relevant solvents.

One aspect of the invention is a thermoplastic molding composition for sheet extrusion and thermoforming applications comprising (or consisting of) components A, B, C, D and optionally E:

(A) 15 to 45 wt.-% of at least one graft copolymer (A) consisting of

15 to 60 wt.-%, preferably 25 to 60 wt.-%, more preferably 35 to 55 wt.-%, most preferred 45 to 55 wt.-%, of a graft sheath (A2) and
40 to 85 wt.-%, preferably 40 to 75 wt.-%, more preferably 45 to 65 wt.-%, of a graft substrate - an agglomerated butadiene rubber latex - (A1), where (A1) and (A2) sum up to 100 wt.-%,

obtained by emulsion polymerization of
styrene and acrylonitrile in a weight ratio of 95:5 to 65:35 to obtain a graft sheath (A2), it being possible for styrene and/or acrylonitrile to be replaced partially (less than 50 wt.-%) by alpha-methylstyrene, methyl methacrylate or maleic anhydride or mixtures thereof,
in the presence of at least one agglomerated butadiene rubber latex (A1) with a median weight particle diameter $D_{50}$ of 150 to 800 nm;
where the agglomerated rubber latex (A1) is obtained by agglomeration of at least one starting butadiene rubber latex (S-A1) having a median weight particle diameter $D_{50}$ of equal to or less than 120 nm, with at least one acid anhydride, preferably acetic anhydride or mixtures of acetic anhydride with acetic acid, in particular acetic anhydride;

(B) 40 to 75 wt.-% of at least one copolymer (B) of styrene and acrylonitrile in a weight ratio of from 80:20 to 65:35, preferably 74:26 to 68:32, it being possible for styrene and/or acrylonitrile to be partially (less than 50 wt.-%) replaced by methyl methacrylate, maleic anhydride and/or 4-phenylstyrene; wherein copolymer (B) has a weight average molar mass $M_w$ of 150,000 to 300,000 g/mol, preferably 180,000 to 210,000 g/mol;

(C) 2.0 to 5.0 wt.-% of at least one elastomeric block copolymer C made from

15 to 65% by weight, based on (C), of at least one diene, preferably butadiene, and
35 to 85% by weight, based on (C), of at least one vinylaromatic monomer, preferably styrene,
which block copolymer C comprises

at least two blocks S which have polymerized units of vinylaromatic monomer, a glass transition temperature $T_g$ above 25°C and form a hard phase, and
at least one elastomeric block B/S (soft phase) which contains both polymerized units of vinylaromatic monomer and diene, has a random structure, a glass transition temperature Tg of from -50 to +25°C and forms a soft phase,
and the amount of the hard phase formed from the blocks S accounting for from 5 to 40% by volume, based on the total block copolymer;

(D) 2.0 to 5.0 wt.-% of a titanium dioxide pigment D comprising (consisting of) at least 95 wt.-% titanium dioxide (= substrate) and 1.7 to 3.3 wt.-%, preferably 2.0 to 3.2 wt.-%, more preferably 2.8 to 3.2 wt.-% alumina (= coating); and

(E) 0 to 7.0 wt.-% of at least one additive and/or processing aid (E) which is different from (D);

wherein the sum of components (A), (B), (C), (D) and, if present, (E) totals 100 wt.-%.

In the context of the invention the term "diene" refers to a 1,3-diene, in particular 1,3-butadiene and/or isoprene, often butadiene.

The term "wt.-%" is identical to "% by weight".

The median weight particle diameter $D_{50}$, also known as the $D_{50}$ value of the integral mass distribution, is defined as the value at which 50 wt.-% of the particles have a diameter smaller than the $D_{50}$ value and 50 wt.-% of the particles have a diameter larger than the $D_{50}$ value. In the present application the weight-average particle diameter $D_w$, in particular the median weight particle diameter $D_{50}$, is determined with a disc centrifuge (e.g.: CPS Instruments Inc. DC 24000 with a disc rotational speed of 24 000 rpm).

The weight-average particle diameter $D_w$ is defined by the following formula (see G. Lagaly, O. Schulz and R. Ziemehl, Dispersionen und Emulsionen: Eine Einführung in die Kolloidik feinverteilter Stoffe einschließlich der Tonminerale, Darmstadt: Steinkopf-Verlag 1997, ISBN 3-7985 -1087-3, page 282, formula 8.3b):

$$D_w = \text{sum} ( n_i * d_i^4 ) / \text{sum}( n_i * d_i^3 )$$

$n_i$: number of particles of diameter $d_i$.

The summation is performed from the smallest to largest diameter of the particles size distribution. It should be mentioned that for a particles size distribution of particles with the same density which is the case for the starting rubber latices and agglomerated rubber latices the volume average particle size diameter Dv is equal to the weight average particle size diameter Dw.

The weight average molar mass $M_w$ and the number average molecular weight $M_n$ are determined by GPC (solvent: tetrahydrofuran, polystyrene as polymer standard) with UV detection according to DIN 55672-1:2016-03.

The volume fraction of the two phases can be measured by means of high-contrast electron microscopy or solid-state NMR spectroscopy.

The glass transition temperature Tg is determined by Differential scanning calorimetry (DSC) according to DIN EN ISO 11357-2:2013.

If in said thermoplastic molding composition optional component E is present, the minimum amount of component E preferably is 0.05, more preferred 0.10 wt.-%.

Preferred are thermoplastic molding compositions in accordance with the invention comprising (consisting of) components A, B, C, D and E in the following amounts:

(A): 20 to 35 wt.-%;
(B): 52 to 68 wt.-%;
(C): 2.0 to 3.9 wt.-%;
(D): 3.0 to 4.8 wt.-%;
(E): 0.1 to 5.0 wt.-%

wherein components A, B, C, D and E have the meaning as described before.

More preferred are thermoplastic molding compositions in accordance with the invention comprising (consisting of) components A, B, C, D and E in the following amounts:

(A): 26 to 33 wt.-%;
(B): 55 to 65 wt.-%;
(C): 2.2 to 3.2 wt.-%;
(D): 3.5 to 4.8 wt.-%;
(E): 0.1 to 5.0 wt.-%

wherein components A, B, C, D and E have the meaning as described before.

Most preferred are thermoplastic molding compositions in accordance with the invention comprising (consisting of) components A, B, C, D and E in the following amounts:

(A): 26 to 32 wt.-%;
(B): 59 to 65 wt.-%;
(C): 2.5 to 2.9 wt.-%;
(D): 3.5 to 4.5 wt.-%;
(E): 0.1 to 2.5 wt.-%

wherein components A, B, C, D and E have the meaning as described before.

In particular preferred are molding composition consisting of components A, B, C, D and E in the amounts as hereinbefore defined.

Component (A)

Graft copolymer (A) (component (A)) is known and described e.g. in WO 2012/022710, WO 2014/170406 and WO 2014/170407.

Graft copolymer (A) consists of 15 to 60 wt.-% of a graft sheath (A2) and 40 to 85 wt.-% of a graft substrate - an agglomerated butadiene rubber latex - (A1), where (A1) and (A2) sum up to 100 wt.-%.

Preferably graft copolymer (A) is obtained by emulsion polymerization of styrene and acrylonitrile in a weight ratio of 80:20 to 65:35, preferably 74:26 to 70:30, to obtain a graft sheath (A2), it being possible for styrene and/or acrylonitrile to be replaced partially (less than 50 wt.-%, preferably less than 20 wt.-%, more preferably less than 10 wt.-

%, based on the total amount of monomers used for the preparation of (A2)) by alpha-methylstyrene, methyl methacrylate or maleic anhydride or mixtures thereof, in the presence of at least one agglomerated butadiene rubber latex (A1) with a median weight particle diameter $D_{50}$ of 150 to 800 nm, preferably 150 to 650 nm.

Preferably the at least one, preferably one, graft copolymer (A) consists of 25 to 60 wt.-% of a graft sheath (A2) and 40 to 75 wt.-% of a graft substrate (A1).

More preferably graft copolymer (A) consists of 35 to 55 wt.-% of a graft sheath (A2) and 45 to 65 wt.-% of a graft substrate (A1).

Most preferably graft copolymer (A) consists of 45 to 55 wt.-%, in particular 48 to 52 wt.-%, of a graft sheath (A2) and 45 to 55 wt.-%, in particular 48 to 52 wt.-% of a graft substrate (A1).

Preferably the obtained graft copolymer (A) has a core-shell-structure; the graft substrate (a1) forms the core and the graft sheath (A2) forms the shell.

Preferably for the preparation of the graft sheath (A2) styrene and acrylonitrile are not partially replaced by one of the above-mentioned comonomers; preferably styrene and acrylonitrile are polymerized alone in a weight ratio of 95:5 to 65:35, preferably 80:20 to 65:35, more preferably 74:26 to 70:30.

The agglomerated rubber latex (A1) may be obtained by agglomeration of at least one starting butadiene rubber latex (S-A1) having a median weight particle diameter $D_{50}$ of equal to or less than 120 nm, preferably equal to or less than 110 nm, with at least one acid anhydride, preferably acetic anhydride or mixtures of acetic anhydride with acetic acid, in particular acetic anhydride, or alternatively, by agglomeration with a dispersion of an acrylate copolymer.

The at least one, preferably one, starting butadiene rubber latex (S-A1) preferably has a median weight particle diameter $D_{50}$ of equal to or less than 110 nm, particularly equal to or less than 87 nm.

The term "butadiene rubber latex" means polybutadiene latices produced by emulsion polymerization of butadiene and up to 30 wt.-% (based on the total amount of monomers used for the production of polybutadiene polymers) of one or more monomers that are copolymerizable with butadiene as comonomers.

Examples for such monomers include isoprene, chloroprene, acrylonitrile, styrene, alpha-methylstyrene, $C_1$-$C_4$-alkylstyrenes, $C_1$-$C_8$-alkylacrylates, $C_1$-$C_8$-alkylmethacrylates, alkyleneglycol diacrylates, alkylenglycol dimethacrylates, divinylbenzol; preferably, butadiene is used alone or mixed with up to 30 wt.-%, preferably up to 20 wt.-%, more preferably up to 15 wt.-% styrene and/or acrylonitrile, preferably styrene.

Preferably the starting butadiene rubber latex (S-A1) consists of 70 to 99 wt.-% of butadiene and 1 to 30 wt.-% styrene.

More preferably the starting butadiene rubber latex (S-A1) consists of 85 to 98 wt.-% of butadiene and 2 to 15 wt.-% styrene.

Most preferably the starting butadiene rubber latex (S-A1) consists of 85 to 97 wt.-% of butadiene and 3 to 15 wt.-% styrene.

The agglomerated rubber latex (graft substrate) (A1) may be obtained by agglomeration of the above-mentioned starting butadiene rubber latex (S-A1) with at least one acid anhydride, preferably acetic anhydride or mixtures of acetic anhydride with acetic acid, in particular acetic anhydride.

The preparation of graft copolymer (A) is described in detail in WO 2012/022710. It can be prepared by a process comprising the steps: $\alpha$) synthesis of starting butadiene rubber latex (S-A1) by emulsion polymerization, $\beta$) agglomeration of latex (S-A1) to obtain the agglomerated butadiene rubber latex (A1), $\gamma$) grafting of the agglomerated butadiene rubber latex (A1) to form a graft copolymer (A), and $\delta$) coagulation of the graft copolymer (A).

The synthesis (step $\alpha$)) of starting butadiene rubber latices (S-A1) is described in detail on pages 5 to 8 of WO 2012/022710 A1. Preferably the starting butadiene rubber latices (S-A1) are produced by an emulsion polymerization process using metal salts, in particular persulfates (e.g. potassium persulfate), as an initiator and a rosin-acid based emulsifier.

As resin or rosin acid-based emulsifiers, those are being used in particular for the production of the starting rubber latices by emulsion polymerization that contain alkaline salts of the rosin acids. Salts of the resin acids are also known as rosin soaps. Examples include alkaline soaps as sodium or potassium salts from disproportionated and/or dehydrated and/or hydrated and/or partially hydrated gum rosin with a content of dehydroabietic acid of at least 30 wt.-% and preferably a content of abietic acid of maximally 1 wt.-%. Furthermore, alkaline soaps as sodium or potassium salts of tall resins or tall oils can be used with a content of dehydroabietic acid of preferably at least 30 wt.-%, a content of abietic acid of preferably maximally 1 wt.-% and a fatty acid content of preferably less than 1 wt.-%.

Mixtures of the aforementioned emulsifiers can also be used for the production of the starting rubber latices. The use of alkaline soaps as sodium or potassium salts from disproportionated and/or dehydrated and/or hydrated and/or partially hydrated gum rosin with a content of dehydroabietic acid of at least 30 wt.-% and a content of abietic acid of maximally 1 wt.-% is advantageous.

Preferably the emulsifier is added in such a concentration that the final particle size of the starting butadiene rubber latex (S-A1) achieved is from 60 to 110 nm (median weight particle diameter $D_{50}$).

Polymerization temperature in the preparation of the starting rubber latices (S-A1) is generally 25°C to 160°C, preferably 40°C to 90°C. Further details to the addition of the monomers, the emulsifier and the initiator are described in WO 2012/022710. Molecular weight regulators, salts, acids and bases can be used as described in WO 2012/022710.

Then the obtained starting butadiene rubber latex (S-A1) is subjected to agglomeration (step β)) to obtain agglomerated rubber latex (A1).

The agglomeration with at least one acid anhydride is described in detail on pages 8 to 12 of WO 2012/022710.

Preferably acetic anhydride, more preferably in admixture with water, is used for the agglomeration. Preferably the agglomeration step β) is carried out by the addition of 0.1 to 5 parts by weight of acetic anhydride per 100 parts of the starting rubber latex solids.

The agglomerated rubber latex (A1) is preferably stabilized by addition of further emulsifier while adjusting the pH value of the latex (A1) to a pH value (at 20°C) between pH 7.5 and pH 11, preferably of at least 8, particular preferably of at least 8.5, in order to minimize the formation of coagulum and to increase the formation of a stable agglomerated rubber latex (A1) with a uniform particle size. As further emulsifier preferably rosin-acid based emulsifiers as described above in step α) are used. The pH value is adjusted by use of bases such as sodium hydroxide solution or preferably potassium hydroxide solution.

The obtained agglomerated rubber latex (A1) has a median weight particle diameter $D_{50}$ of generally 150 to 800 nm, preferably 150 to 650 nm.

The agglomerated rubber latex (A1) can have a mono-, bi-, tri- or multimodal particle size distribution, a bimodal particle size distribution is preferred.

A bi-,tri- or multimodal particle size distribution can be achieved by a partial agglomeration of the fine-particle starting butadiene rubber latex (S-A1) or by use of a mixture of two or more mono-modal agglomerated rubber latices (A1) having different median weight particle diameters $D_{50}$.

A preferred agglomerated rubber latex (A1) has a bimodal particle size distribution and is a mixture of at least one agglomerated rubber latex (A1-1) having a median weight particle diameter $D_{50}$ of 150 to 350 nm, preferably 200 to 300 nm, more preferably 200 to 270 nm, most preferred 220 to 250 nm, and, at least one agglomerated rubber latex (A1-2) having a median weight particle diameter $D_{50}$ of 425 to 650 nm, more preferred 450 to 600 nm, most preferred 450 to 550 nm.

The mixing ratio of the agglomerated rubber latex (A1-1) and (A1-2) is preferably 50/50 to 90/10.

In step γ) the agglomerated rubber latex (A1), preferably the afore-mentioned mixture of agglomerated rubber latices (A1-1) and (A1-2), is grafted to form the graft copolymer (A).

The grafting reaction (step γ) may be carried out in the same system as the polymerization of the starting butadiene rubber latex (S-A1), and further emulsifier and initiator may be added. These need not be identical to the emulsifiers or initiators used for the preparation of the starting butadiene rubber latex (S-A1). For the selection of emulsifier, initiator, regulator, etc., it is referred to the remarks made in (step α) above. Further details to polymerization conditions, emulsifiers, initiators, molecular weight regulators used in grafting step γ) are described in detail on pages 12 to 14 of WO 2012/022710 A1.

Graft copolymer (A) is obtained by emulsion polymerization of styrene and acrylonitrile - optionally partially replaced by alpha-methylstyrene, methyl methacrylate and/or maleic anhydride - in a weight ratio of 95:5 to 65:35 to obtain a graft sheath (A2) (in particular a graft shell) in the presence of the above-mentioned agglomerated butadiene rubber latex (A1).

Graft copolymer (A) can have a mono-, bi-, tri- or multimodal, preferably bimodal, particle size distribution.

Preferably graft copolymer (A) has a core-shell-structure.

Preferably the graft polymerization is carried out by use of a redox catalyst system, e.g. with cumene hydroperoxide or tert.-butyl hydroperoxide as preferable hydroperoxides. For the other components of the redox catalyst system, any reducing agent and metal component known from literature can be used.

Preferably styrene and acrylonitrile - optionally partially replaced by alpha-methylstyrene, methyl methacrylate and/or maleic anhydride - in a weight ratio of 95:5 to 65:35 to obtain graft sheath (A2) are added continuously to the afore-mentioned mixture of agglomerated rubber latices (A1-1) and (A1-2) and the polymerization is carried out until the reaction is completed. The obtained graft copolymer (A) has a bimodal particle size distribution.

The preparation of the graft copolymer (A) is completed by coagulation (step δ) of the obtained latex of graft copolymer (A).

In step δ) preferably a metal salt solution or combination of acid and metal salt solution, preferably a metal salt solution, is used for the coagulation of the obtained latex of graft copolymer (A). The metal salt solution can be a solution of alkaline and/or alkaline earth metal salts. A preferred salt solution for the coagulation in step δ) is MgSO4.

Alternatively - less preferred - in step δ) the coagulation of the obtained latex of graft copolymer (A) can be done by using a diluted warm solution of sulphuric acid. The sulphuric acid is generally added in an amount of less than 5 parts by weight (pbw), preferably less than 3 pbw, with respect to the total solid content of the latex of graft copolymer (A).

After coagulation step δ), washing and drying of the graft copolymer (A) can be done by common methods.

Preference is given to the use of at least one graft copolymer (A) consisting of 45 to 60 wt.-%, in particular 45 to 55 wt.-%, of a graft sheath (A2) and 40 to 55 wt.-%, preferably 45 to 55 wt.-%, of a graft substrate - an agglomerated butadiene rubber latex - (A1), where (A1) and (A2) sum up to 100 wt.-%, obtained by emulsion polymerization of styrene and acrylonitrile in a weight ratio of 80:20 to 65:35, preferably 75:25 to 65:35, to obtain a graft sheath (A2), in the presence of at least one agglomerated butadiene rubber latex (A1) with a median weight particle diameter $D_{50}$ of 150 to 800 nm, where the agglomerated rubber latex (A1) is obtained by agglomeration of at least one starting butadiene rubber latex (S-A1) which rubber latex (S-A1) is obtained by emulsion polymerization 80 to 98 wt.-%, preferably from 85 to 97 wt.-% 1,3-butadiene, and 2 to 20 wt .-%, preferably 3 to 15 wt .-% styrene.

More preferred is a graft copolymer (A) as afore-mentioned wherein the agglomerated rubber latex (A1) has a bimodal particle size distribution and is a mixture of at least one agglomerated rubber latex (A1-1) having a median weight particle diameter $D_{50}$ of 150 to 350 nm, preferably 200 to 300 nm, more preferably 200 to 270 nm, most preferred 220 to 250 nm, and, at least one agglomerated rubber latex (A1-2) having a median weight particle diameter $D_{50}$ of 425 to 650 nm, more preferred 450 to 600 nm, most preferred 450 to 550 nm, and wherein the mixing ratio of the agglomerated rubber latex (A1-1) and (A1-2) is preferably 50/50 to 90/10, more preferably 75/25 to 85/15.

In case of the afore-mentioned preferred graft copolymers (A) in the coagulation step δ) generally a metal salt solution or combination of acid and metal salt solution, preferably a metal salt solution, in particular MgSO4 is used for the coagulation of the obtained latex of graft copolymer (A).

Component (B)

Preferably copolymer (B) (= component (B)) is a copolymer of styrene and acrylonitrile in a weight ratio of from preferably 78:22 to 65:35, more preferably 75:25 to 70:30, most preferred 74:26 to 72:28, it being possible for styrene and/or acrylonitrile to be partially (less than 50 wt.-%, preferably less than 20 wt.-%, more preferably less than 10 wt.-%, based on the total amount of monomers used for the preparation of (B)) replaced by methyl methacrylate, maleic anhydride and/or 4-phenylstyrene.

It is preferred that styrene and acrylonitrile are not partially replaced by one of the above-mentioned comonomers. Component (B) is preferably a copolymer of styrene and acrylonitrile.

The weight average molar mass $M_w$ of copolymer (B) generally is 130,000 to 300,000 g/mol, preferably 140,000 to 220,000 g/mol, more preferably 150,000 to 200,000 g/mol, most preferably 175,000 to 200,000 g/mol.

Details relating to the preparation of such copolymers are described, for example, in DE-A 2 420 358, DE-A 2 724 360 and in Kunststoff-Handbuch ([Plastics Handbook], Vieweg-Daumiller, volume V, (Polystyrol [Polystyrene]), Carl-Hanser-Verlag, Munich, 1969, pp. 122 ff., lines 12 ff.). Such copolymers prepared by mass (bulk) or solution polymerization in, for example, toluene or ethylbenzene, have proved to be particularly suitable.

Component (C)

Block copolymer C can be represented, for example, by one of the formulae 1 to 12:

(1) S-B/S-S;
(2) (S-B/S)n;
(3) (S-B/S)n-S;
(4) B/S-(S-B/S)n;
(5) X-[(S-B/S)n]m+1;
(6) X-[(B/S--S)n]m+1;
(7) X-[(S-B/S)n-S]m+1;
(8) X-[(B/S-S)n-B/S]m+1;
(9) Y-[(S-B/S)n]m+1;
(10) Y-[(B/S--S)n]m+1;
(11) Y-[(S-B/S)n-S]m+1;
(12) Y-[(B/S--S)n-B/S]m+1;

where S is the hard phase and B/S is the soft phase, ie. the block built up randomly from diene units and vinylaromatic monomer units, X is the radical of an n-functional initiator, Y is the radical of an m-functional coupling agent and m and n are natural numbers from 1 to 10.

Styrene, α-methylstyrene, p-methylstyrene, ethylstyrene, tert-butylstyrene, vinyltoluene or mixtures thereof can be used as vinylaromatic monomers both for the hard blocks S and for the soft blocks B/S. Styrene is preferably used.

Butadiene, isoprene, 2,3-dimethylbutadiene, 1,3-pentadiene, 1,3-hexadienes or piperylene or mixtures thereof are preferably used as dienes for the soft block B/S. 1,3-butadiene is particularly preferably used.

A preferred block copolymer (C) is one of the general formulae S-(B/S)-S, X-[-(B/S)-S]₂ and Y-[-(B/S)-S]₂ (for the meanings of abbreviations, see above) and a particularly preferred block copolymer is one whose soft phase is divided into blocks $(B/S)_1$ -$(B/S)_2$; $(B/S)_1$ -$(B/S)_2$ -$(B/S)_1$ and $(B/S)_1$ -$(B/S)_2$ -$(B/S)_3$; whose vinylaromatic/diene ratio differs in the individual blocks B/S or changes continuously within a block within the limits $(B/S)_1$ $(B/S)_2$, the glass transition temperature $T_g$ of each sub-block being below 25°C.

A block copolymer which has a plurality of blocks B/S and/or S having different molecular weights per molecule is likewise preferred.

A particularly preferred combination of monomers is butadiene and styrene.

Preferably the B/S block is composed of 60 to 30% by weight of vinylaromatic monomer, preferably styrene, and 40 to 70% by weight of diene, preferably butadiene.

Preferred are block copolymers (C) made from a monomer composition consisting of 25 to 39% by weight of diene, in particular butadiene, and 75 to 61% by weight of the vinylaromatic monomer, in particular styrene.

The block copolymers (C) are generally prepared by anionic polymerization in a nonpolar solvent with the addition of a polar co-solvent (see WO 95/35335, pages 5-6).

The concept here is that the co-solvent acts as a Lewis base toward the metal cation. Preferably used solvents are aliphatic hydrocarbons, such as cyclohexane or methylcyclohexane. Polar aprotic compounds, such as ethers and tertiary amines, are preferred as Lewis bases. Examples of particularly effective ethers are tetrahydrofuran and aliphatic polyethers, such as diethylene glycol dimethyl ether. Examples of tertiary amines are tributylamine and pyridine. The polar cosolvent is added to the nonpolar solvent in a small amount, for example 0.5-5% by volume. Tetrahydrofuran in an amount of 0.1-0.3% by volume is particularly preferred. Experience has shown that an amount of about 0.2% by volume is sufficient in most cases.

The copolymerization parameters and the amount of 1,2- and 1,4-bonds of the diene units are determined by the metering and structure of the Lewis base.

The polymers contain, for example, 15-40% of 1,2-bonds and 85-60% of 1,4-bonds, based on all diene units.

The anionic polymerization is initiated by means of organometallic compounds. Compounds of the alkali metals, particularly lithium, are preferred. Examples of initiators are methyllithium, ethyllithium, propyllithium, n-butyllithium, sec-butyllithium and tert-butyllithium. The organometallic compound is added as a solution in a chemically inert hydrocarbon. The amount metered depends on the desired molecular weight of the polymer but is as a rule from 0.002 to 5 mol %, based on the monomers.

The polymerization temperature may be from 0 to 130, preferably from 30 to 100 °C.

The amount by volume of the flexible phase in the solid is of decisive importance for the mechanical properties. The amount by volume of the soft phase B/S composed of diene and vinylaromatic sequences is 60 to 95, preferably 70 to 90, particularly preferably 80 to 90, % by volume.

The blocks S formed from the vinylaromatic monomers constitute the hard phase, which accounts for 5 to 40, preferably 10 to 30, particularly preferably 10 to 20, % by volume.

It should be pointed out that there is no strict correlation between the abovementioned ratios of vinylaromatic monomer and diene, the abovementioned limits of the phase volumes and the composition which arises from the ranges of the glass transition temperature, since the relevant numbers in each case are numerical values rounded up to the nearest tens unit. Any correlation is likely to be merely accidental.

The volume fraction of the two phases can be measured by means of high-contrast electron microscopy or solid-state NMR spectroscopy. The amount of vinylaromatic blocks can be determined by precipitation and weighing following osmium degradation of the polydiene content. The future phase ratio of a polymer can also be calculated from the amounts of monomers used if polymerization is taken to completion every time.

In addition, it is to be pointed out (cf. J. Brandrup, E. H. Immergut, Polymer Handbook, John Wiley, N.Y.) that the densities of styrene/butadiene copolymers can be calculated approximately from the mass fractions of the monomers; thus, the density of polybutadiene (obtained by anionic polymerization) is 0.895 g/ml and the density of polystyrene is about 1.05 g/ml (mean value), whereas the density is stated as 0.933 for a styrene/butadiene copolymer (SB rubber) containing 23.5% of styrene. The calculated density would be 0.960.

The block copolymer (C) is unambiguously defined by the quotient of the volume fraction as a percentage of the soft phase formed from the B/S blocks and the fraction of diene units in the soft phase, which is from 25 to 70% by weight.

The glass transition temperature $(T_g)$ is influenced by the random incorporation of vinylaromatic monomers in the soft block B/S of the block copolymer and the use of Lewis bases during the polymerization. A glass transition temperature of from -50 to +25 C, preferably from -50 to +5°C is typical.

The molecular weight of block S is in general from 1000 to 200,000, preferably from 3000 to 80,000, g/mol. Within a molecule, S blocks may have different molecular weights.

The molecular weight of block B/S is usually from 2000 to 250,000, preferably from 5000 to 150,000, g/mol. As in the case of block S, block B/S too may assume different molecular weight values within a molecule.

The coupling center X is formed by the reaction of the living anionic chain ends with a bifunctional or polyfunctional coupling agent. Examples of such compounds are given in US Patent Nos. 3,985,830, 3,280,084, 3,637,554 and 4,091,053. For example, epoxidized glycerides, such as epoxidized linseed oil or soybean oil, are preferably used; divinylbenzene is also suitable. Dichlorodialkylsilanes, dialdehydes, such as tereph-thalaldehyde, and esters, such as ethyl formate or ethyl benzoate, are particularly suitable for the dimerization.

Preferred polymer structures are S-(B/S)-S, X-[-(B/S)-S]$_2$ and Y-[-(B/S)-S]$_2$, where the random block B/S itself may in turn be divided into blocks B1/S1-B2/S2-B3/S3- .... The random block preferably consists of from 2 to 15, particularly preferably from 3 to 10, random subblocks. The division of the random block B/S into as many subblocks Bn/Sn as possible has the decisive advantage that the B/A block as a whole behaves like a virtually perfect random polymer even in the case of a composition gradient within a subblock Bn/Sn.

Particular preference is given to linear styrene-butadiene block copolymers of the general structure S-(S/B)-S having, situated between the two S blocks, one or more (S/B)-random blocks having random styrene/butadiene distribution. These block copolymers are described by way of example in WO 95/35335 and WO 97/40079.

The vinyl content is the relative proportion of 1,2-linkages of the diene units, based on the entirety of 1,2-, 1,4-cis and 1,4-trans linkages. The 1,2-vinyl content in the styrene-butadiene copolymer block (S/B) is preferably below 20%, in particular in the range from 9 to 15%, particularly preferably in the range from 9 to 12%. Suitable block copolymers C having such a 1,2-vinyl content in the styrene-butadiene copolymer block (S/B) are described in detail in WO 97/40079. Such a preferred elastomeric block copolymer having less tendency to crosslink is obtained if, within the above parameters, the soft phase is formed from a random copolymer of a vinylaromatic with a diene; random copolymers of vinylaromatics and dienes are obtained by polymerization in the presence of a potassium salt soluble in nonpolar solvents. The random copolymerization of styrene and butadiene in cyclohexane in the presence of soluble potassium salts is described by S. D. Smith, A. Ashraf et al. in Polymer Preprints 34(2) (1993), 672, and 35(2) (1994), 466.

Potassium 2,3-dimethyl-3-pentanolate and potassium 3-ethyl-3-pentanolate are mentioned as soluble potassium salts. When the amount of potassium salt required for strictly random copolymerization of, for example, styrene and butadiene is added, the relative proportion of the 1,2-vinyl structure remains below 15%, in an advantageous case below about 11-12%, based on the sum of 1,2-vinyl and 1,4-cis/trans microstructure. In the case of butyllithium-initiated polymerization in cyclohexane, the molar ratio of lithium to potassium in this case is from about 10:1 to 40:1. If a composition gradient (ie. a composition changing more or less fluently from butadiene to styrene) is desired along the random block, Li/K ratios greater than 40:1 should be chosen, and ratios of less than 10:1 in the case of a gradient from styrene to butadiene.

The random blocks of the block copolymers, which blocks simultaneously contain vinylaromatic and diene, are preferably prepared with the addition of a soluble potassium salt, in particular of a potassium alcoholate. It is believed that the potassium salt undergoes metal exchange with the lithium-carbanion ion pair, potassium carbanions being formed and preferably undergoing an addition reaction with styrene, while lithium cabanions preferably undergo an addition reaction with butadiene. Because potassium carbanions are substantially more reactive, a small fraction, i.e. from 1/10 to 1/40, is sufficient on average, together with the predominant lithium carbanions, to make the incorporation of styrene and butadiene equally probable.

Furthermore, it is believed that metal exchange frequently occurs between the living chains and between a living chain and the dissolved salt during the polymerization process, so that the same chain preferably undergoes addition with styrene on the one hand and then with butadiene on the other hand. Consequently, the copolymerization parameters are then virtually the same for styrene and butadiene. Particularly suitable potassium salts are potassium alcoholates, in this case in particular tertiary alcoholates of at least 7 carbon atoms. Typical corresponding alcohols are, for example, 3-ethyl-3-pentanol and 2,3-dimethyl-3-pentanol. Tetrahydro-linalool (3,7-dimethyl-3-octanol) has proven particularly suitable. In addition to the potassium alcoholates, other potassium salts which are inert to metal alkyls are in principle also suitable. Examples of these are dialkyl potassium amides, alkylated diaryl potassium amides, alkyl thiolates and alkylated aryl thiolates.

The time when the potassium salt is added to the reaction medium is important. Usually, at least parts of the solvent and the monomer for the first block are initially taken in the reaction vessel. It is not advisable to add the potassium salt at this time as it is at leas partially hydrolyzed to KOH and alcohol by traces of protic impurities. The potassium ions are then irreversibly deactivated for the polymerization. The lithium organyl should therefore be added first and mixed in before the potassium salt is added.

If the first block is a homo-polymer, it is advisable to add the potassium salt only shortly before the polymerization of the random block.

The potassium alcoholate can readily be prepared from the corresponding alcohol by stirring a cyclohexane solution in the presence of excess potassium-sodium alloy. After 24 hours at 25 °C, the devolution of hydrogen and hence the reaction are complete. However, the reaction can also be shortened to a few hours by refluxing at 80 °C. An alternative reaction involves adding a small excess of potassium methylate, potassium ethylate or potassium tert-butylate to the alcohol in the presence of a high-boiling inert solvent, such as decalin or ethylbenzene, distilling off the low-boiling alcohol, in this case methanol, ethanol or tert-butanol, diluting the residue with cyclohexane and filtering off the solution from excess sparingly soluble alcoholate.

Preferred block copolymers A according to the present invention are linear styrene-butadiene block copolymers of the general structure S-(S/B)-S having, situated between the two S blocks, one or more (S/B)-random blocks having random styrene/butadiene distribution, and a 1,2-vinyl content in the styrene-butadiene copolymer block (S/B) of below 20%.

Further preferred block copolymers (C) have a star-shaped molecular architecture, where the star-shaped molecular architecture has at least two different arms of the star, having the structure of the following general formulae:

$$Y[(B/S-S)_n]_m[S]_l$$

$$Y[(S-B/S)_n-S]m[S]_l$$

where S, B/S, n and m have the meaning given above, Y is the moiety of an (m + l)-functional coupling agent, and l is a natural number from 1 to 10. Said star shaped block copolymers C are described in detail in WO 2012/055919.

Preferred block copolymers (C) are commercially available as Styroflex®2G66.

Component (D)

Suitable titanium dioxide pigments (D) comprise at least 95 wt.-%, preferably at least 96 wt.-% titanium dioxide (= substrate), and 1.7 to 3.3 wt.-%, preferably 2.0 to 3.2 wt.-%, more preferably 2.8 to 3.2 wt.-% alumina (= coating).

Suitable titanium dioxide pigments (D) are commercially available as titanium dioxide pigment grade R103 and/or R-350 from the Chemours (Dupont) Company, Singapore.

Preferably said pigments (D) do not comprise silica.

Advantageously the titanium dioxide pigments (D) are modified by an organic treatment. Preferred titanium dioxide pigments (D) obtained after said organic treatment have hydrophilic properties.

Titanium dioxide pigments (D) having hydrophilic properties are preferred.

Said preferred (hydrophilic) titanium dioxide pigments (D) comprise at least 96 wt.-% titanium dioxide and 2.0 to 3.2 wt.-%, more preferably 2.8 to 3.2 wt.-% alumina, provided that silica is not present.

Often said preferred (hydrophilic) titanium dioxide pigments comprise (or consist of) at least 96 wt.-% titanium dioxide, 2.0 to 3.2 wt.-%, more preferably 2.8 to 3.2 wt.-% alumina and 0.1 to 0.3 wt.-%, in particular 0.2 wt.-% carbon, provided that silica is not present.

Such a preferred (hydrophilic) titanium dioxide pigment is commercially available as titanium dioxide pigment grade R-103 from the Chemours Company, Singapore.

Said preferred pigments (D) are characterized by an excellent thermal stability, a high tinting strength and a more bluish undertone.

Said properties help in achieving the desired color and gloss with a minimum possible loading rather contributing towards lower density of the final product. The titanium dioxide pigments (D) contribute towards improved mechanical properties of the final product also, because the quantity of the same to be added in the thermoplastic molding composition according to the invention is very low, thus reducing the entire inorganic content. Presence of inorganic content always leads to deterioration in mechanical properties.

Component (E)

Various additives and/or processing aids (E) (= component (E)) may be added to the molding compounds according to the invention in amounts of from 0.01 to 5 wt.-% as assistants and processing additives. Suitable additives and/or processing aids (E) include all substances customarily employed for processing or finishing the polymers. Component (E) is different from component (D) and does preferably not comprise a further white pigment.

Examples include, for example, dyes, pigments other than white pigments, colorants, fibers/fillers, antistats, antioxidants, stabilizers for improving thermal stability, stabilizers for increasing photostability, stabilizers for enhancing hydrolysis resistance and chemical resistance, anti-thermal decomposition agents, dispersing agents, and in particular external/internal lubricants that are useful for production of molded bodies/articles.

These additives and/or processing aids may be admixed at any stage of the manufacturing operation, but preferably at an early stage in order to profit early on from the stabilizing effects (or other specific effects) of the added substance.

Preferably component (E) is at least one lubricant, antioxidant, colorant and/or pigment, except of white pigments.

Furthermore preferably component (E) is at least one lubricant, antioxidant, colorant and/or at least one pigment selected from blue, red or violet pigments.

Suitable lubricants/glidants and demolding agents include stearic acids, stearyl alcohol, stearic esters, amide waxes (bisstearylamide, in particular ethylenebisstearamide), polysiloxanes, polyolefin waxes and/or generally higher fatty acids, derivatives thereof and corresponding fatty acid mixtures comprising 12 to 30 carbon atoms.

Examples of suitable antioxidants include sterically hindered monocyclic or polycyclic phenolic antioxidants which may comprise various substitutions and may also be bridged by substituents. These include not only monomeric but also oligomeric compounds, which may be constructed of a plurality of phenolic units.

Hydroquinones and hydroquinone analogs are also suitable, as are substituted compounds, and also antioxidants based on tocopherols and derivatives thereof.

It is also possible to use mixtures of different antioxidants. It is possible in principle to use any compounds which are customary in the trade or suitable for styrene copolymers, for example antioxidants from the Irganox range. In addition to the phenolic antioxidants cited above by way of example, it is also possible to use so-called costabilizers, in particular phosphorus- or sulfur-containing costabilizers. These phosphorus- or sulfur-containing costabilizers are known to those skilled in the art.

For further additives and/or processing aids, see, for example, "Plastics Additives Handbook", Ed. Gächter and Müller, 4th edition, Hanser Publ., Munich, 1996.

Specific examples of suitable additives and/or processing aids are mentioned on pages 23 to 26 of WO 2014/170406.

Preparation of Thermoplastic Molding Composition

The molding composition of the invention may be produced from the components (A), (B), (C), (D), and, if present, (E) by any known method. However, it is preferable when the components are premixed and blended by melt mixing, for example conjoint extrusion, preferably with a twin-screw extruder, kneading or rolling of the components.

This is done at temperatures in the range of from 160°C to 300°C, preferably from 180°C to 250°C, more preferably 190°C to 220°C. In a preferred embodiment, the component (A) is first partially or completely isolated from the aqueous dispersion obtained in the respective production steps. For example, the graft copolymers (A) may be mixed as a moist or dry crumb/powder (for example having a residual moisture of from 1 to 40%, in particular 20 to 40%) with the other components, complete drying of the graft copolymers (A) then taking place during the mixing. The drying of the particles may also be performed as per DE-A 19907136.

The thermoplastic molding compositions according to the invention have an excellent environmental stress crack resistance (ESCR) in the presence of foam blowing agents such as hydrocarbons, in particular cyclopentane, or chlorofluoroolefins (CFO), as well as a high color and thermal stability and a low tendency to delamination.

Further aspects of the invention are the use of the inventive thermoplastic molding composition for the production of shaped articles, in particular produced by sheet extrusion and/or thermoforming processes, and further shaped articles, in particular sheet extruded and/or thermoformed articles, obtained by said process.

One further aspect of the invention is the use of the thermoplastic molding composition according to the invention for automotive and household applications, in particular for household applications e.g as inner liner in cooling apparatuses.

The invention is further illustrated by the examples and the claims.

Examples

Test Methods

Particle Size Dw/ $D_{50}$

For measuring the weight average particle size Dw (in particular the median weight particle diameter D50) with the disc centrifuge DC 24000 by CPS Instruments Inc. equipped with a low density disc, an aqueous sugar solution of 17.1 mL with a density gradient of 8 to 20% by wt. of saccharose in the centrifuge disc was used, in order to achieve a stable flotation behavior of the particles. A polybutadiene latex with a narrow distribution and a mean particle size of 405 nm was used for calibration. The measurements were carried out at a rotational speed of the disc of 24,000 r.p.m. by injecting 0.1 mL of a diluted rubber dispersion into an aqueous 24% by wt. saccharose solution.

The calculation of the weight average particle size Dw was performed by means of the formula

$$D_w = sum\ (\ n_i * d_i^4\ )\ /\ sum(\ n_i * d_i^3\ )$$

$n_i$: number of particles of diameter $d_i$.

Molar Mass $M_w$

The weight average molar mass $M_w$ is determined by GPC (solvent: tetrahydrofuran, polystyrene as polymer standard) with UV detection according to DIN 55672-1:2016-03.

Tensile Strength (TS) and Tensile Modulus (TM) Test

Tensile test (ASTM D 638) of ABS blends was carried out at 23°C using a Universal testing Machine (UTM) of Lloyd Instruments, UK.

Flexural Strength (FS) and Flexural Modulus (FM) Test

Flexural test of ABS blends (ASTM D 790 standard) was carried out at 23°C using a UTM of Lloyd Instruments, UK.

Notched Izod Impact Strength (NIIS) Test

Izod impact tests were performed on notched specimens (ASTM D 256 standard) using an instrument of CEAST (part of Instron's product line), Italy.

Melt Flow Index (MFI) or Melt Volume Flow Rate (MFR)

MFI/MFR test was performed on ABS pellets (ISO 1133 standard, ASTM 1238, 220°C/10 kg load) using a MFI-machine of CEAST, Italy.

ESCR Test Method

Chemical resistance of the ABS grade with respect to the blowing agent cyclopentane is determined as follows: In this test metal jigs are prepared for a particular fiber strain. Tests for 1.5, 2.5 and 100 percent fiber strain (180° bending) of standard test bars have been done. The test is performed by bending rectangular shaped samples (3.2 mm x 12.7 mm x 128 mm) on a jig with an imposed outer fiber strain of 1.5% and 2.5% and immersing it in n-cyclopentane for 30 seconds at 23°C. After removing from cyclopentane, the sample is allowed to stay on the jig with imposed strain for another 90 seconds. Then it is removed from the jig and bent manually to 180°.
The determination of chemical resistance was done optically in dependence of the following criteria: complete crack, partial crack, surface crack, edge crack, and surface quality after aging.
A summary is then given by the following symbols:
▲: highly affected (break, complete crack) ▲ ▲: affected ▲ ▲ ▲: a little affected ▲ ▲ ▲ ▲: not affected

Thermal Stability Test Method

In this test the thermal stability of the product in terms of deterioration in color index is determined. For this, the color index of the sheet is measured for each successive extrusion trial and the color variation (b value) is measured. Sheets are extruded at various temperatures and color coordinates as well as gloss are measured to check the degree of deterioration of optical parameters with increase of melt temperature.

Delamination Test Method

In general delamination is a localized defect caused by excessive lubricants or due to perturbance of the molding parameters. However, it is possible to correlate the delamination strength to the ABS molding composition, where the bonding between the polymer chains or molecular layers contributes to the peeling resistance.
A homogeneous sheet of uniform thickness (0.70 to 0.75 mm) is made and two of such sheets of same width (29 to 30 mm) and thickness (0.70 to 0.75 mm) are fused by compression molding (hydraulic press: temperature (°C) 175 +/-5; pressure (kg/cm$^2$) 1-2; time (s) 30 +/-5) to make a single fused sheet with two free edges to fix to the grip of a universal testing machine (UTM) of Instron, UK.

Delamination UTM specification (initial distance between the grip is 115 mm. The test is done for a total strain of 50 mm at cross head speed of 5.0 mm/min)

The two free edges are pulled in UTM with constant force and the sheet is allowed to delaminate in the "fused region". The maximum strength recorded is taken as delamination strength for the composition.

Migration Test Method

The specific migration of acrylonitrile and 1,3 butadiene in samples of ABS molding compositions (sheet thickness: 2.6 mm) was tested with reference to EN 13130-1:2004 (test method for the specific migration of substances from plastics to foods and food simulants and the determination of substances in plastics) by treatment with one of the following three stimulating agents: 3% acetic acid, 95% ethanol and isooctane, at 5°C for 10 days. The analysis was performed by Headspace (HS) GC-MS.
Materials used:

Component (A)

Graft copolymer (A)-1 (= R1)

Preparation of the fine-particle butadiene rubber latex (S-A1-1)

The fine-particle butadiene rubber latex (S-A1-1) which is used for the agglomeration step was produced by emulsion polymerization using tert-dodecylmercaptan as chain transfer agent and potassium persulfate as initiator at temperatures from 60° to 80°C. The addition of potassium persulfate marked the beginning of the polymerization. Finally the fine-particle butadiene rubber latex (S-A1-1) was cooled below 50°C and the non reacted monomers were removed partially under vacuum (200 to 500 mbar) at temperatures below 50°C which defines the end of the polymerization.
Then the latex solids (in % per weight) were determined by evaporation of a sample at 180°C for 25 min. in a drying cabinet. The monomer conversion is calculated from the measured latex solids. The butadiene rubber latex (S-A1-1) is characterized by the following parameters, see table 1.
No seed latex is used. As emulsifier the potassium salt of a disproportionated rosin (amount of potassium dehydroabietate: 52 wt.-%, potassium abietate: 0 wt.-%) and as salt tetrasodium pyrophosphate is used.

Table 1: Composition of the butadiene rubber latex S-A1-1

| Latex | S-A1-1 |
|---|---|
| Monomer butadiene/styrene | 90/10 |
| Seed Latex (wt.-% based on monomers) | ./. |
| Emulsifier (wt.-% based on monomers) | 2.80 |
| Potassium Persulfate (wt.-% based on monomers) | 0.10 |
| Decomposed Potassium Persulfate (parts per 100 parts latex solids) | 0.068 |
| Salt (wt.-% based on monomers) | 0.559 |
| Salt amount relative to the weight of solids of the rubber latex | 0.598 |
| Monomer conversion (%) | 89.3 |
| Dw (nm) | 87 |
| pH | 10.6 |
| Latex solids content (wt.-%) | 42.6 |
| K | 0.91 |

$$K = W * ( 1 - 1.4 * S ) * Dw$$

W = decomposed potassium persulfate [parts per 100 parts rubber]
S = salt amount in percent relative to the weight of solids of the rubber latex
Dw = weight average particle size (= median particle diameter $D_{50}$) of the fine-particle butadiene rubber latex (S-A1)

Production of the coarse-particle, agglomerated butadiene rubber latices (A1)

The production of the coarse-particle, agglomerated butadiene rubber latices (A1) was performed with the specified amounts mentioned in table 2. The fine-particle butadiene rubber latex (S-A1) was provided first at 25°C and was adjusted if necessary with deionized water to a certain concentration and stirred. To this dispersion an amount of acetic anhydride based on 100 parts of the solids from the fine-particle butadiene rubber latex (S-A1) as fresh produced aqueous mixture with a concentration of 4.58 wt.-% was added and the total mixture was stirred for 60 seconds. After this the agglomeration was carried out for 30 minutes without stirring. Subsequently KOH was added as a 3 to 5 wt.-% aqueous solution to the agglomerated latex and mixed by stirring. After filtration through a 50 $\mu$m filter the amount of coagulate as solid mass based on 100 parts solids of the fine-particle butadiene rubber latex (S-A1) was determined. The solid content of the agglomerated butadiene rubber latex (A), the pH value und the median weight particle diameter $D_{50}$ was determined.

Table 2: Production of the coarse-particle, agglomerated butadiene rubber latices (A1)

| latex A1 | | A1-1 | A1-2 |
|---|---|---|---|
| used latex S-A1 | | S-A1-1 | S-A1-1 |
| concentration latex S-A1 before agglomeration | wt.-% | 37.4 | 37.4 |
| amount acetic anhydride | parts | 0.90 | 0.91 |
| amount KOH | parts | 0.81 | 0.82 |
| concentration KOH solution | wt.-% | 3 | 3 |
| solid content latex A1 | wt.-% | 32.5 | 32.5 |
| Coagulate | parts | 0.01 | 0.00 |
| pH | | 9.0 | 9.0 |
| $D_{50}$ | nm | 315 | 328 |

Production of the graft copolymer (A)-1 (= R1)

59.5 wt.-parts of mixtures of the coarse-particle, agglomerated butadiene rubber latices A1-1 and A1-2 (ratio 50 : 50, calculated as solids of the rubber latices (A1)) were diluted with water to a solid content of 27.5 wt.-% and heated to 55°C.

40.5 wt.-parts of a mixture consisting of 72 wt.-parts styrene, 28 wt.-parts acrylonitrile and 0.4 wt.-parts tert-dodecylmercaptan were added in 3 hours 30 minutes.

At the same time when the monomer feed started the polymerization was started by feeding 0.15 wt.-parts cumene hydroperoxide together with 0.57 wt.-parts of a potassium salt of disproportionated rosin (amount of potassium dehydroabietate: 52 wt.-%, potassium abietate: 0 wt.-%) as aqueous solution and separately an aqueous solution of 0.22 wt.-parts of glucose, 0.36 wt.-% of tetrasodium pyrophosphate and 0.005 wt.-% of iron-(II)-sulfate within 3 hours 30 minutes.

The temperature was increased from 55 to 75°C within 3 hours 30 minutes after start feeding the monomers. The polymerization was carried out for further 2 hours at 75°C and then the graft rubber latex (= graft copolymer A) was cooled to ambient temperature. The graft rubber latex was stabilized with ca. 0.6 wt.-parts of a phenolic antioxidant and precipitated with sulfuric acid, washed with water and the wet graft powder was dried at 70°C (residual humidity less than 0.5 wt.-%).

The obtained product is graft copolymer (A)-1 (= R1).

Graft copolymer (A)-2 (= R2)

Preparation of the fine-particle butadiene rubber latex (S-A1-2)

The particulate cross-linked fine-particle rubber latex used for the preparation of component A (graft copolymer) was prepared by radical emulsion polymerization of butadiene and styrene (monomer weight ratio 90/10) in the presence of distilled tallow fatty acid (CAS-No. 67701-06-8, C14-C18-saturated and C15-C18-unsaturated straight chain aliphatic monocarboxylic acid), tert-dodecylmercaptan as chain transfer agent, potassium persulfate as initiator at temperatures from 60° to 85°C. As salt tetrasodium pyrophosphate is used.

The addition of initiator marked the beginning of the polymerization. Finally the fine-particle butadiene rubber latexes are cooled below 50°C and the non-reacted monomers were removed partially under vacuum (200 to 500 mbar) at temperatures below 50°C which defines the end of the polymerization.

The starting butadiene rubber latex (S-A1-2) so obtained has solid content of 41 wt.-%, a rubber gel content of 93 % (wire cage method in toluene), a rubber composition comprising units derived from styrene and butadiene in a weight ratio of 10/90 and a weight-average particle size of 0.08 $\mu$m (determined via Differential Centrifugation using a disc centrifuge from CPS Instruments).

The starting butadiene rubber latex (S-A1-2) was subjected to particle size enlargement with acetic anhydride in two batches to a weight-average particle size $D_w$ of 0.25 $\mu$m and 0.55 $\mu$m, respectively.

In order to achieve agglomerated butadiene rubber latices (A1-3) with $D_w$ of 0.25 $\mu$m, the fine-particle butadiene rubber latices (S-A1-2) are being provided first at 25°C and are adjusted if necessary with deionized water to a concentration of 36 wt.-% and stirred. The temperature was raised to 40°C. To this dispersion, 1.3 weight parts of acetic anhydride based on 100 parts of the solids from the fine-particle butadiene rubber latex as aqueous mixture is added and mixed with the latex. After this the agglomeration is carried out for 10 minutes without stirring. Anionic dispersant of sulfonic polyelectrolyte type (Sodium naphthalene sulfonate formaldehyde condensates, CAS 9084-06-04) are added as aqueous solution to the agglomerated latex and mixed by stirring. Subsequently KOH are added as aqueous solution to the agglomerated latex and mixed by stirring. The solid content of the agglomerated butadiene rubber latex (A1-3) with $D_w$ of 0.25 $\mu$m is 28.5 wt.-%.

In order to achieve agglomerated butadiene rubber latices with $D_w$ of 0.55 $\mu$m, the fine-particle butadiene rubber latices (S-A1-2) are being provided first at 25°C and are adjusted if necessary with deionized water to a concentration of 33 wt.% and stirred.

To this dispersion, 2 weight parts of acetic anhydride based on 100 parts of the solids from the fine-particle butadiene rubber latex as aqueous mixture is added and mixed with the latex. After this the agglomeration is carried out for 30 minutes without stirring. Anionic dispersant of sulfonic polyelectrolyte type (Sodium naphthalene sulfonate formaldehyde condensates, CAS 9084-06-04) are added as aqueous solution to the agglomerated latex and mixed by stirring. Subsequently KOH are added as aqueous solution to the agglomerated latex and mixed by stirring. The solid content of the agglomerated butadiene rubber latex (A1-4) with $D_w$ of 0.55 $\mu$m is 24.7 wt.-%. The two latices with 0.25 $\mu$m (80 pbw A1-3) and 0.55 $\mu$m (20 pbw A1-4) were combined to the agglomerated rubber latex A1-5 which is used in the further reaction step in the form of polymer latexes which have a solids content of 26 wt.-%.

Preparation of the Graft Copolymer (A)-2 (= R2)

The graft copolymer (A)-2 is prepared (as parts by weight) from 52 styrene/butadiene-rubber, 34 styrene, 14 acrylonitrile, together with cumene hydroperoxide, dextrose, ferrous sulfate, t-dodecylmercaptane, disproportionated potassium rosinate soap, and emulsion graft polymerization was conducted.

Firstly, the afore-mentioned agglomerated rubber latex A1-5 was charged, and the temperature was raised to 70°C. Styrene, acrylonitrile, t-dodecylmercaptane, disproportionated potassium rosinate soap and deionized water were added. At 70°C, the catalyst solution (sodium pyrophosphate, dextrose, cumene hydroperoxide and ferrous sulfate dissolved in water) was added. After completion of the addition, the stirring was continued for further 30 minutes, and then the mixture was cooled. To the graft copolymer latex thus obtained, an aging-preventive agent (e.g. Antioxidant PL / Wingstay L, Phenol, 4-methyl-, reaction products with dicyclopentadiene and isobutene, CAS-No. 68610-51-5) was added, and the mixture was added under stirring to an aqueous magnesium sulfate solution heated to 95°C, for coagulation. The coagulated product was washed with water and dried to obtain a high rubber content resin composition in the form of a white powder.

Component (B)

Statistical copolymer (B-I) from styrene and acrylonitrile with a ratio of polymerized styrene to acrylonitrile of 72:28 with a weight average molecular weight Mw of 185,000 g/mol, a polydispersity of Mw/Mn of 2.5 and a melt volume flow rate (MVR) (220°C/10 kg load) of 6 to 7 mL/10 minutes, produced by free radical solution polymerization.

Component (C)

C-I: Styroflex®2G66 (styrene butadiene block copolymer) from Ineos Styrolution, Germany.

Component (D)

D-I (= P9): Titanium dioxide pigment grade R-103® from the Chemours Company, Singapore.
D-II (= P1) - TiO₂ grade R-350® (TiO2/alumina/silica : 95/1.7/3.0 wt.-%, hydrophobic) (from The Chemours Company)
D-III (= P5) - TDR 60 - TiO₂ grade R-350 60% master batch in SAN-copolymer (From SM Chemical Corporation).

Component (E)

E-1 - ethylene bis stearamide, primary lubricant (from Palmamide SDN BHD)
E-2 - Licowax®, external lubricant - wax based on PE chemistry (from Clariant Chemicals (India) Limited)
E-3 - MgO - metal oxide as acid scavenger (from Kyowa chemical industry co. Ltd)
E-4 - polydimethylsiloxane with kinematic viscosity of 30000 cSt (from K.K.Chempro India Pvt Ltd.)
E-5 - Kinox® 68-A phosphate based stabilizer (from HPL Additives Ltd)
E-6 - Irganox® 1076, a phenolic based antioxidant (from HPL Additives Ltd)
E-7 - distearyl thiodipropionate (from Omtech Chemicals Industries Pvt Ltd)
E-8 - distearyl penta erythritol diphosphate (from Addivant Switzerland GmbH)
E-10 (= P2) - Blue RLS (from Clariant Chemicals (India) Ltd)
E-11 (= P3) - Red YP (from Philoden Industries Pvt Ltd)
E-12 (= P4) - Telalux KSN - Optical brightener (from Clariant Chemicals (India) Limited)
E-14 (= P6) - UM Blue (from Ultramarine & Pigments Ltd.)
E-15 (= P7) - VIOLET FBL (from Parshwnath Dye Chem Ind. Pvt. Ltd)
E-16 (= P8) - Violet RRR (from Parshwnath Dye Chem Ind. Pvt. Ltd)
E-17 (= P10) - TiO₂ grade R-105 (TiO₂/alumina/silica : 92/1.7/3.5 wt.-%, hydrophobic) (from The Chemours Company)

Thermoplastic compositions

Graft copolymers R1 or R2, SAN-copolymer (B-I), SBC-block copolymer (C-1), component (D-1) and the further additives E-1 to E-17 were mixed (composition see Tables 1 and 5, batch size 5 kg) for 2 minutes in a high speed mixer to obtain good dispersion and a uniform premix and then said premix was melt blended in a twin-screw extruder at a speed of 80 rpm and using an incremental temperature profile from 190 to 220° C for the different barrel zones.
The extruded strands were cooled in a water bath, air-dried and pelletized.
Standard test specimens (ASTM test bars) of the obtained blend were injection molded at a temperature of 190 to 230°C and test specimens were prepared for mechanical testing.
The test results are presented in Tables 2 and 6.

Table 1: Molding Compositions A to H with different SBC-content

| Composition | (in wt.-%) | | | | | | | |
|---|---|---|---|---|---|---|---|---|
| | A | B | C | D (Plant trial) | E | F | G | H |
| Graft copolymer (R1) | 28.24 | 28.24 | 28.24 | 28.13 | 28.24 | 28.24 | 28.18 | 28.19 |
| SBC (C-I) | | 1.41 | 2.82 | 2.81 | 3.76 | 4.71 | 6.58 | 9.40 |
| SAN copolymer (B-I) | 65.88 | 64.47 | 63.06 | 62.83 | 62.12 | 61.18 | 59.18 | 56.37 |
| E-1 | 1.41 | 1.41 | 1.41 | 1.41 | 1.41 | 1.41 | 1.41 | 1.41 |
| E-2 | 0.28 | 0.28 | 0.28 | 0.28 | 0.28 | 0.28 | 0.28 | 0.28 |
| E-3 | 0.19 | 0.19 | 0.19 | 0.38 | 0.19 | 0.19 | 0.19 | 0.19 |
| E-4 | 0.09 | 0.09 | 0.09 | 0.09 | 0.09 | 0.09 | 0.09 | 0.09 |
| E-5 | 0.12 | 0.12 | 0.12 | 0.12 | 0.12 | 0.12 | 0.12 | 0.12 |
| P-1 (D-II) | 3.76 | 3.76 | 3.76 | 3.94 | 3.76 | 3.76 | 3.95 | 3.95 |
| P-2 | 0.0014 | 0.0014 | 0.0014 | 0.0015 | 0.0014 | 0.0014 | 0.0014 | 0.0014 |
| P-3 | 0.019 | 0.019 | 0.019 | 0.010 | 0.019 | 0.019 | 0.019 | 0.010 |
| P-4 | | | | 0.00015 | | | | |

(continued)

| Composition | (in wt.-%) | | | | | | | |
|---|---|---|---|---|---|---|---|---|
| | A | B | C | D (Plant trial) | E | F | G | H |
| Total % | 100 | 100 | 100 | 100 | 100 | 100 | 100 | 100 |

Table 2: Properties of Molding Compositions A to H with different SBC-content

| Details of Tests Performed | | | ABS RS 670* | Properties of molding composition A to H | | | | | | | |
|---|---|---|---|---|---|---|---|---|---|---|---|
| | | | | A | B | C | D (Plant Trial) | E | F | G | H |
| ESCR Test Results Cyclopentane | Fiber Strain using Jig | 1.50 % | ▲▲▲ | ▲▲▲ | ▲▲▲▲ | ▲▲▲▲ | ▲▲▲▲ | ▲▲▲▲ | ▲▲▲▲ | ▲▲▲▲ | ▲▲▲▲ |
| | | 2.50 % | ▲▲▲ | ▲▲▲ | ▲▲▲▲ | ▲▲▲▲ | ▲▲▲▲ | ▲▲▲▲ | ▲▲▲▲ | ▲▲▲▲ | ▲▲▲▲ |
| | 180° Bending | 100 % | ▲▲▲ | ▲▲ | ▲▲▲ | ▲▲▲ | ▲▲▲▲ | ▲▲▲▲ | ▲▲▲▲ | ▲▲▲▲ | ▲▲▲▲ |
| | MFI | | 5 | 6.9 | 7 | 7.4 | 5 | 8 | 7.9 | 7 | 8 |
| Mechanical properties | NIIS , 1/4" | | 36 | 28.5 | 31.5 | 35.5 | 40.5 | 36.5 | 39.5 | 43.5 | 42.5 |
| | NIIS, 1/8" | | 43 | 32 | 37 | 43 | 50 | 45 | 48 | 50 | 30 |
| | Tensile Strength | | 485 | 510 | 500 | 500 | 510 | 490 | 470 | 435 | 400 |
| | Flexural Strength | | 900 | 895 | 880 | 860 | 865 | 845 | 815 | 745 | 685 |
| | Flexural Modulus | | 30K | 30 K | 29 K | 28 K | 27 K | 27 K | 26 K | 24K | 22K |
| Color data | L | | 93.6 | 92.8 | 92.5 | 92.7 | 94.2 | 92.8 | 92.5 | 93.1 | 93.0 |
| | A | | -2.15 | -1.61 | -1.71 | -1.7 | -1.7 | -1.9 | -1.8 | -1.6 | -1.6 |
| | B | | -2.04 | -2.43 | -2.46 | -2.4 | -2.3 | -2.6 | -2.5 | -3.4 | -3.6 |
| | Yellowness Index | | -5.67 | -6.1 | -6.26 | -6.1 | -5.8 | -6.6 | -6.4 | -8.1 | -8.5 |

Legend ▲: highly affected ( Break ) ▲ ▲ : affected ▲ ▲ ▲ : a little affected ▲ ▲ ▲ ▲ : not affected
*extrusion molding grade for refrigerator inner liners commercially available from LG Chem

The properties of ABS molding compositions A to H comprising different amounts of SBC (C-I) are shown in Table 2. The studies show an optimum amount of SBC (C-I) in the range of 2.8 to 4.7 wt.-%, in particular in the range of 2.8 to 3.8 wt.-%, considering both mechanical properties and the chemical resistance boosted by compatibilization achieved by a synergistic effect.

Table 3: The effect of the SBC-content on the delamination of compressed sheets of molding compositions A to H

| Details of Tests Performed | | ABS RS 670* | Molding compositions A to H | | | | | | |
|---|---|---|---|---|---|---|---|---|---|
| | | | A | B | D | E | F | G | H |
| Delamination force on fused sheet specimen | Max. Load (kgf) | 8.5 | 14.1 | 15.3 | 14.9 | 12.7 | 8.9 | 6.4 | 3.6 |
| | Tensile at Yield (kg/cm$^2$) | 21.4 | 36.3 | 40.6 | 32.5 | 32.2 | 25.8 | 17.5 | 8.6 |

Fused specimens of the ABS blends A to H (having different SBC content) were prepared and were tested in a universal testing machine for the delamination force. Table 3 shows that the blend D having a SBC content of 2.81 wt.-% has a high binding adhesion (low tendency to delamination) and has the best overall properties (cp. Table 2) of the tested blends A to H.

Furthermore, injection molded specimens of blends A to H were prepared using an injection molding machine as per the standard molding parameters and the delamination was studied.

Herein is shown the delamination of molded specimens, in particular the formation of layered structures in molded specimens made from blends having a SBC content of 6.58 wt.-% and more. Delamination was only observed in the case of blends having a higher SBC content (6.58 wt.-% and more, cp. Table 4 below). The problem is severe and the layer can be easily peeled off from the surface of specimens.

Table 4: The effect of the SBC-content on the delamination of injection molded specimens of molding compositions A to H

| Details of Tests | ABS RS 670* | Molding composition A to H | | | | | | |
|---|---|---|---|---|---|---|---|---|
| | | A | B | D | E | F | G | H |
| Delamination of molded specimen | No | No | No | No | No | No | Yes | Yes |

Molding Compositions with a different graft copolymer R1 or R2 and different titanium dioxide pigments were prepared and tested. The composition of said blends is shown in Table 5 and the obtained test results are presented in Table 6.

Table 5: Molding Compositions with different graft copolymer R1 or R2 and different titanium dioxide pigments

| composition | Example 1 (non-inventive) | Example 2 | Example 3 | Example 4 | Example 5 |
|---|---|---|---|---|---|
| Graft copolymer R1 | 28.40 | 27.95 | | | |
| Graft copolymer R2 | | | 28.00 | 28.20 | 28.27 |
| SAN (B-I) | 66.27 | 59.44 | 62.50 | 62.90 | 63.13 |
| SBC (C-I) | | 2.80 | 2.80 | 2.80 | 2.80 |
| E-1 | 0.38 | 1.49 | 1.40 | 1.40 | 1.40 |
| E-2 | | 0.28 | | | |
| E-3 | 0.095 | 0.093 | | | |
| E-4 | 0.142 | 0.116 | 0.23 | 0.23 | 0.23 |
| E-5 | 0.189 | 0.000 | 0.37 | 0.38 | - |
| E-6 | 0.38 | | 0.19 | 0.19 | - |
| E-7 | 0.14 | | | | |
| E-8 | | 0.37 | | - | 0.23 |
| P2 | | 0.00056 | 0.00206 | 0.0015 | 0.00139 |
| P5 (D-III) | | 7.45** | | | |
| P6 | 0.029 | | | | |
| P7 | | 0.0016 | 0.00049 | 0.00056 | 0.057 |
| P8 | 0.00098 | | | | |
| P9 (D-I) | | | 4.48 | 3.94 | 3.89 |
| P10 | 3.98 | | | | |
| | | | | | |
| Total % Composition | 100 | 100 | 100 | 100 | 100 |
| **content TiO$_2$ 4.47 wt.-% | | | | | |

Table 6: Properties of Molding Compositions with different graft copolymer R1 or R2 and different titanium dioxide pigments

| Details of Tests Performed | | | ABS RS 670 | Example 1 (non-inventive) | Example 2 | Example 3 | Example 4 | Example 5 |
|---|---|---|---|---|---|---|---|---|
| ESCR Test Results Cyclopentane | Fiber Strain using Jig | 1.50 % | ▲▲▲ | ▲▲▲ | ▲▲▲▲ | ▲▲▲▲ | ▲▲▲▲ | ▲▲▲▲ |
| | | 250 % | ▲▲▲ | ▲▲▲ | ▲▲▲▲ | ▲▲▲▲ | ▲▲▲▲ | ▲▲▲▲ |
| | 180° Bending | 100 % | ▲▲▲ | ▲▲ | ▲▲▲ | ▲▲▲▲ | ▲▲▲▲ | ▲▲▲▲ |
| | MFI | | 5 | 6.9 | 7 | 4.5 | 4.5 | 4.4 |
| Mechanical properties | NIIS , 1/4" | | 36 | 28.5 | 31.5 | 34.5 | 33 | 34 |
| | NIIS, 1/8" | | 43 | 32 | 37 | 49 | 49.5 | 49 |
| | Tensile Strength | | 485 | 510 | 500 | 498 | 520 | 480 |
| | Flexural Strength | | 900 | 895 | 880 | 880 | 880 | 825 |
| | Flexural Modulus | | 30 K | 30 K | 28 K | 27 K | 27 K | 26 K |
| Color data | L | | 93.6 | 92.8 | 92.7 | 93.6 | 93.6 | 94.0 |
| | a | | -2.15 | -1.61 | -1.7 | -2.32 | -1.97 | -2.07 |
| | b | | -2.04 | -2.43 | -2.4 | -2.26 | -2.13 | -2.29 |
| | Yellowness Index | | -5.67 | -6.1 | -6.1 | -5.81 | -5.76 | -6.12 |
| **Legend ▲**: highly affected ( Break ) ▲ ▲ : affected ▲ ▲ ▲ : a little affected ▲ ▲ ▲ ▲ : not affected | | | | | | | | |

All blends (SBC content 2.8 wt.-%) of inventive examples 2 to 5 show an improved chemical resistance to foam blowing agents in comparison to prior art blends. Moreover, the blends of examples 3 to 5 (comprising graft copolymer R2 and titanium dioxide pigment P9) show a superior resistance to foam blowing agents and further improved mechanical properties such as a high notched izod impact strength and a very high flexural strength.

The color stability of molding compositions comprising graft copolymer R2 and different titanium dioxide pigments was tested. The obtained results are shown in Table 6A.

Table 6A: Molding compositions comprising different titanium dioxide pigments

| | ABS RS 670* | Composition (wt.-%) | | |
|---|---|---|---|---|
| | Reference | Example 6 | Example 7 | Example 8 |
| Graft copolymer R2 | | 30 | 30 | 30 |
| B-I | | 67 | 67 | 67 |
| C-I | | 3 | 3 | 3 |
| E17 (TIO2 R-105) | | 4.8 | ------ | ------ |
| D-II (TiO2-R-350) | | ----- | 4.8 | ------ |
| D-I (TIO2 R 103) | | ------ | ------ | 4.8 |
| Properties | | | | |
| L | 93.44 | 92.43 | 92.67 | 93.19 |

(continued)

| Properties | | | | |
|---|---|---|---|---|
| a | -2.1 | -1.53 | -2.23 | -2.09 |
| b | -1.99 | -1.92 | -2.65 | -2.12 |
| Delta E | 0.44 | 0.75 | 1.01 | 0.24 |

The optical performance of the molding composition of Example 8 which comprises a titanium dioxide pigment of grade R-103 is excellent as evidenced by the low delta E value (cp. Table 6A). The data show the superiority of Example 8 in comparison to the molding compositions of Examples 6 and 7 with other titanium dioxide pigments.

The thermal stability of a molding composition according to Example 5 was tested under different extrusion conditions, in particular at different die head (DH) temperatures (cp. Table 7).

Table 7: Thermal Stability Test

| | L | A | B | Yellowness | DE |
|---|---|---|---|---|---|
| ABS RS 670 molded plaques | 93.23 | -1.98 | -1.91 | -5.34 | 0.3 |
| Example 5 molded plaques | 93.58 | -2.23 | -2.23 | -5.89 | 0.51 |

| Extruded sheet prepared at different DH temperature | | | | | | | | | |
|---|---|---|---|---|---|---|---|---|---|
| DH Temperature | L *** | A *** | B *** | Yellow ness | Delta yellowness | ΔL*** | Δa*** | Δb*** | ΔE*** |
| Example 5 238°C | 93.23 | -2.31 | -1.99 | -5.75 | -0.41 | -0.01 | -0.33 | -0.07 | 0.34 |
| Example 5 240°C | 93.19 | -2.29 | -1.99 | -5.76 | -0.41 | -0.05 | -0.32 | -0.08 | 0.33 |
| Example 5 255°C | 93.04 | -2.28 | -1.85 | -5.48 | -0.13 | -0.20 | -0.30 | 0.06 | 0.37 |
| Example 45 265°C | 93.04 | -2.41 | -1.36 | -4.58 | 0.77 | -0.19 | -0.43 | 0.55 | 0.73 |

| ABS RS 670 at different DH temperature | | | | | | | | | |
|---|---|---|---|---|---|---|---|---|---|
| ABS RS 670 238°C | 92.51 | -1.87 | -1.55 | -4.58 | 0.76 | -0.73 | 0.10 | 0.36 | 0.82 |
| ABS RS 670 240°C | 92.34 | -1.72 | -1.35 | -4.06 | 1.28 | -0.90 | 0.26 | 0.56 | 1.09 |
| ABS RS 670 255°C | 92.42 | -1.88 | -1.41 | -4.29 | 1.05 | -0.82 | 0.10 | 0.50 | 0.96 |
| ABS RS 670 265°C | 92.27 | -1.93 | -1.16 | -3.84 | 1.95 | -0.75 | 0.01 | 0.98 | 1.23 |

The optical parameters (L a b) of these extruded sheets at different die head temperature is compared with that of standard molded plaques (ABS RS 670). Delta E (DE, ΔE) is a calculated value showing the color difference.

The L, a, b color space is a three dimensional rectangular color space based on the opponent color theory (CIE Method).

- L (Lightness) Axis- 0 is black, 100 is White.
- a (Red-Green) Axis- Positive values are red; negative values are green and 0 is neutral.

- b (Blue- Yellow) Axis- Positive values are yellow; negative values are blue and 0 is neutral.
- Delta E*** (Total Color Difference) - is based on L***, a***, b*** color differences and was intend to be a single number metric for Pass/Fail decisions. If sample is having L, a, b values measured by Spectrophotometer as; $L_S$, $A_S$, $B_S$ and reference is having L, a, b values as; $L_R$, $A_R$, $B_R$ then DE is calculated as below;

$$DE = \sqrt{(L_R - L_S)^2 + (A_R - A_S)^2 + (B_R - B_S)^2}$$

The molding composition according to Example 5 showed a superior performance in comparison to samples of a commercial product (ABS RS 670 from LG Chem). The commercial molding composition showed a higher yellowing (higher value of yellowness). For example, at 265° DH temperature, the molding composition according to the invention has a yellowness value of -4.58 while that of the commercial molding composition is -3.84 (higher the value, higher the yellowness which is undesirable).

In the following the migration of residuals was tested (cp. Table 8). The molding composition according to Example 5 was analyzed for the leaching or diffusion of residuals to understand the chemical resistance as well as to comply with the food regulations.

Table 8:

| Migration test of molding composition of Example 5 | | | | | | |
|---|---|---|---|---|---|---|
| Test No. | Simulant used | Specific Migration | Result (mg /kg) | Reporting Limit (mg /kg) | Permissible limit (mg /kg ) | Conclusion |
| 1 | 3% Acetic Acid (W/V) aqueous solution | 1,3 Butadiene | Not detected | 0.1 | 1 | Pass |
| | 95 % Ethanol | 1,3 Butadiene | Not detected | 0.1 | 1 | Pass |
| | ISO Octane | 1,3 Butadiene | Not detected | 0.1 | 1 | Pass |
| 2 | 3% Acetic Acid (W/V) aqueous solution | Acrylonitrile | Not detected | 0.01 | 0.01 | Pass |
| | 95 % Ethanol | Acrylonitrile | Not detected | 0.01 | 0.01 | Pass |
| | ISO Octane | Acrylonitrile | Not detected | 0.01 | 0.01 | Pass |
| Note: 1. mg/kg= milligram per kilogram of foodstuff in contact with 2. Permissible limit is according to Commission Regulation (EU) No 10/2011 of 14 January 2011 with amendments. | | | | | | |

It was found that under the specified conditions prescribed by EU norms, there is no detectable amount of residuals found in different simulates. This proves that the molding composition according to Example 5 is excellent for the use in refrigerator liners.

The following are test results (see Tables 9 to 12) of large-scale trials wherein the compositions according to the invention were used. For this purpose the composition according to Example 5 was tested for various properties at one of reputed sheet extrusion and thermoforming firm and the following results were obtained. Initially extruded sheets with a thickness of 3.0 mm and dimension (as per ASTM) were prepared and the following properties are measured (cp. Table 9).

Table 9: Mechanical testing of compositions according to Example 5 after commercial sheet extrusion

| Test Item | Specification | Sample Quantity | No.1 | No.2 | No.3 | No.4 | No.5 | Average | Approval Judgement |
|---|---|---|---|---|---|---|---|---|---|
| Specific gravity | 1.051~1.081 | 1 | | | 1.068 | | | 1.068 | OK |

(continued)

| Test Item | Specification | Sample Quantity | No.1 | No.2 | No.3 | No.4 | No.5 | Average | Approval Judgement |
|---|---|---|---|---|---|---|---|---|---|
| Specific gravity | 1.051~1.081 | 1 | | | 1.069 | | | 1.069 | OK |
| Izod Impact(MD) | 15kg.cm/cm↑ | 5 | 18.6 | 17.9 | 19.2 | 18.6 | 18.6 | 18.58 | OK |
| Izod Impact(MD) | 15kg.cm/cm↑ | 5 | 16.5 | 15.6 | 15.6 | 15.9 | 15.6 | 15.84 | OK |
| Izod Impact(TD) | 15kg.cm/cm↑ | 5 | 28.7 | 29.4 | 28.7 | 28.7 | 28.1 | 28.72 | OK |
| Izod Impact(TD) | 15kg.cm/cm↑ | 5 | 35.6 | 34.9 | 36.2 | 36.8 | 35.6 | 35.82 | OK |

The performance of the molding composition is found to be good (cp. Table 9).

Table 10 shows the color difference of an extruded sheet and a thermoforming component prepared from a composition of Example 5 in comparison to a prior art blend (ABS RS 670).

Table 10: Color measurements after sheet extrusion and thermoforming

| commercial trial sample | L | a | b | Delta L | Delta a | Delta b | Delta E |
|---|---|---|---|---|---|---|---|
| ABS RS 670 sheet | 92.51 | -2.14 | -1.21 | | | | |
| Example 5 sheet | 93.59 | -2.41 | -1.60 | | | | |
| | | | | | | | |
| ABS RS 670 thermoforming component | 92.48 | -2.05 | -0.78 | 0.03 | -0.09 | -0.43 | 0.44 |
| Example 5 thermoforming component | 92.86 | -1.95 | -1.15 | -0.33 | 0.15 | 0.63 | 0.72 |

The yellowness reduction - indicated by the b values - of the inventive molding composition is better compared to the prior art blend. The b value is the most concerned parameter in the production of refrigerator inner liners.

Table 11 shows gloss measurements of two thermoformed models prepared from a composition of Example 5 in comparison to a prior art blend (ABS RS 670).

Table 11: Gloss measurements after thermoforming

| Location | Grade | Gloss % | | | | | | |
|---|---|---|---|---|---|---|---|---|
| | | Top | Right | Left | Bottom | Center | Average | Judge |
| Refrigerator | ABS RS 670 | 88.85 | 85.95 | 86.9 | 84.95 | 91.4 | 87.61 | Pass |
| | Example 5 | 86.3 | 77.25 | 83.75 | 85.05 | 90.5 | 84.57 | Pass |
| Freezer | ABS RS 670 | 84.1 | 76.7 | 91.3 | 76 | 60.75 | 77.77 | Pass |
| | Example 5 | 80.65 | 86.5 | 88.4 | 71 | 61.95 | 77.7 | Pass |
| The gloss is found to be good. | | | | | | | | |

Extruded sheets prepared from a composition of Example 5 were tested for their UV stability. The measurement method is shown below and results are shown in Table 12.

Equipment: Portable UV Cabinet
UV lamps Details: UVA 366 nm, 8W and UVC 254nm, 7W (both kept on)
Sample distance: 50mm from the source
Temperature: 26°C
Total Exposure time: 24 hours
Results by: Data Color Spectrophotometer 850

Table 12: UV stability of a composition according to Example 5

| Time of UV exposure | L | a | b | Delta L | Delta a | Delta b | Delta E |
|---|---|---|---|---|---|---|---|
| 0 hours | 93.09 | -2.09 | -1.07 | | | | |
| 8hrs | 93.02 | -1.96 | -1.25 | 0.07 | -0.13 | 0.18 | 0.23 |
| 16hrs | 93.03 | -1.94 | -1.33 | 0.06 | -0.15 | 0.26 | 0.31 |
| 24hrs | 93.07 | -1.91 | -1.37 | 0.02 | -0.18 | 0.3 | 0.35 |

The data show - indicated by a low change of all tested values - that the molding composition according to Example 5 exhibits a high UV stability which is required for many automotive and household applications.

## Claims

1. Thermoplastic molding composition comprising components A, B, C, D and optionally E:

(A) 15 to 45 wt.-% of at least one graft copolymer (A) consisting of

15 to 60 wt.-%, preferably 25 to 60 wt.-%, more preferably 35 to 55 wt.-%, most preferred 45 to 55 wt.-%, of a graft sheath (A2) and
40 to 85 wt.-%, preferably 40 to 75 wt.-%, more preferably 45 to 55 wt.-%, of a graft substrate - an agglomerated butadiene rubber latex - (A1), where (A1) and (A2) sum up to 100 wt.-%,
obtained by emulsion polymerization of
styrene and acrylonitrile in a weight ratio of 95:5 to 65:35 to obtain a graft sheath (A2), it being possible for styrene and/or acrylonitrile to be replaced partially (less than 50 wt.-%) by alpha-methylstyrene, methyl methacrylate or maleic anhydride or mixtures thereof,
in the presence of at least one agglomerated butadiene rubber latex (A1) with a median weight particle diameter D50 of 150 to 800 nm;
where the agglomerated rubber latex (A1) is obtained by agglomeration of at least one starting butadiene rubber latex (S-A1) having a median weight particle diameter D50 of equal to or less than 120 nm, with at least one acid anhydride, preferably acetic anhydride or mixtures of acetic anhydride with acetic acid, in particular acetic anhydride;

(B) 40 to 75 wt.-% of at least one copolymer (B) of styrene and acrylonitrile in a weight ratio of from 80:20 to 65:35, preferably 74:26 to 68:32, it being possible for styrene and/or acrylonitrile to be partially (less than 50 wt.-%) replaced by methyl methacrylate, maleic anhydride and/or 4-phenylstyrene;
wherein copolymer (B) has a weight average molar mass $M_w$ of 150,000 to 300,000 g/mol, preferably 180,000 to 210,000 g/mol;
(C) 2.0 to 5.0 wt.-% of at least one elastomeric block copolymer (C) made from

15 to 65% by weight, based on (C), of at least one diene, preferably butadiene, and
35 to 85% by weight, based on (C), of at least one vinylaromatic monomer, preferably styrene,
which block copolymer C comprises

at least two blocks S which have polymerized units of vinylaromatic monomer, a glass transition temperature $T_g$ above 25°C and form a hard phase, and at least one elastomeric block B/S (soft phase) which contains both polymerized units of vinylaromatic monomer and diene, has a random structure, a glass transition temperature Tg of from -50 to +25°C and forms a soft phase,
and the amount of the hard phase formed from the blocks S accounting for from 5 to 40% by volume, based on the total block copolymer;

(D) 2.0 to 5.0 wt.-% of a titanium dioxide pigment D comprising (consisting of) at least 95 wt.-% titanium dioxide (= substrate) and 1.7 to 3.3 wt.-%, preferably 2.0 to 3.2 wt.-%, more preferably 2.8 to 3.2 wt.-% alumina (= coating); and
(E) 0 to 7.0 wt.-% of at least one additive and/or processing aid (E) which is different from (D);
wherein the sum of components (A), (B), (C), (D) and, if present, (E) totals 100 wt.-%, and wherein the median weight particle diameter D50 is determined with a disc centrifuge, the weight average molar mass $M_w$ is determined by GPC with UV detection according to DIN 55672-1:2016-03, and the glass transition temperature Tg is determined by Differential scanning calorimetry (DSC) according to DIN EN ISO 11357-2:2013.

2. Thermoplastic molding composition according to claim 1 comprising components A, B, C, D and E in the following amounts:

(A): 20 to 35 wt.-%;
(B): 52 to 68 wt.-%;
(C): 2.0 to 3.9 wt.-%;
(D): 3.0 to 4.8 wt.-%;
(E): 0.1 to 5.0 wt.-%.

3. Thermoplastic molding composition according to claim 1 or 2 comprising components A, B, C, D and E in the following amounts:

(A): 26 to 33 wt.-%;
(B): 55 to 65 wt.-%;
(C): 2.2 to 3.2 wt.-%;
(D): 3.5 to 4.8 wt.-%;
(E): 0.1 to 5.0 wt.-%.

4. Thermoplastic molding composition according to any of claims 1 to 3 wherein graft copolymer (A) consists of 35 to 55 wt.-%, preferably 45 to 55 wt.-%, of a graft sheath (A2) and 45 to 65 wt.-%, of a graft substrate - an agglomerated butadiene rubber latex - (A1);

graft copolymer (A) is obtained by emulsion polymerization of styrene and acrylonitrile in a weight ratio of 80:20 to 65:35, preferably 74:26 to 70:30, to obtain a graft sheath (A2); and
the starting butadiene rubber latex (S-A1) consists of 85 to 98 wt.-% of butadiene and 2 to 15 wt.-% styrene.

5. Thermoplastic molding composition according to any of claims 1 to 4 wherein
the agglomerated rubber latex (A1) of graft copolymer (A) has a bimodal particle size distribution and is a mixture of at least one agglomerated rubber latex (A1-1) having a median weight particle diameter $D_{50}$ of 150 to 350 nm, preferably 200 to 270 nm, and at least one agglomerated rubber latex (A1-2) having a median weight particle diameter $D_{50}$ of 425 to 650, preferably 450 to 550 nm.

6. Thermoplastic molding composition according to any of claims 1 to 5 wherein graft copolymer (A) is prepared by a process comprising the steps: $\alpha$) synthesis of starting butadiene rubber latex (S-A1) by emulsion polymerization, $\beta$) agglomeration of latex (S-A1) to obtain the agglomerated butadiene rubber latex (A1), $\gamma$) grafting of the agglomerated butadiene rubber latex (A1) to form a graft copolymer (A), and $\delta$) coagulation of the graft copolymer (A).

7. Thermoplastic molding composition according to claim 5 wherein in coagulation step $\delta$) of claim 6 a metal salt solution, in particular $MgSO_4$, is used.

8. Thermoplastic molding composition according to any of claims 1 to 7 wherein the elastomeric block B/S of block copolymer (C) is composed of 60 to 30% by weight of vinylaromatic monomer, preferably styrene, and 40 to 70% by weight of diene, preferably butadiene.

9. Thermoplastic molding composition according to any of claims 1 to 8 wherein block copolymer (C) is made from 25 to 39% by weight of diene, in particular butadiene, and 75 to 61% by weight of the vinylaromatic monomer, in particular styrene.

10. Thermoplastic molding composition according to any of claims 1 to 9 wherein block copolymer (C) is one of the general formulae S-(B/S)-S, X-[-(B/S)-S]$_2$ and Y-[-(B/S)-S]$_2$, in particular S-(B/S)-S, where X is the radical of an n-functional initiator, Y is the radical of an m-functional coupling agent, m and n are natural numbers from 1 to 10, and S and B/S are as defined above.

11. Thermoplastic molding composition according to any of claims 1 to 10 wherein the titanium dioxide pigment (D) is modified by an organic treatment and has hydrophilic properties.

12. Thermoplastic molding composition according to any of claims 1 to 11 wherein the titanium dioxide pigment (D) comprises at least 96 wt.-% titanium dioxide and 2.0 to 3.2 wt.-%, more preferably 2.8 to 3.2 wt.-% alumina, provided that silica is not present.

13. Thermoplastic molding composition according to any of claims 1 to 12 wherein component (E) is at least one lubricant, antioxidant, colorant and/or pigment, except of white pigments.

14. Process for the preparation of the thermoplastic molding composition according to any of claims 1 to 13 by melt mixing the components (A), (B), (C), (D), and, if present, (E) at temperatures in the range of from 160°C to 300°C.

15. Use of the thermoplastic molding composition according to any of claims 1 to 13 for the production of shaped articles, in particular sheet extruded and/or thermoformed articles.

16. Sheet extruded and/or thermoformed article made from the thermoplastic molding composition according to any of claims 1 to 13.

17. Use of a sheet extruded and/or thermoformed article according to claim 16 for automotive and household applications.

18. Use of a sheet extruded and/or thermoformed article according to claim 16 as inner liner in cooling apparatuses.


**Patentansprüche**

1. Thermoplastische Formmasse enthaltend Komponenten A, B, C, D und gegebenenfalls E:

   (A) 15 bis 45 Gew.-% mindestens eines Pfropfcopolymers (A) bestehend aus

      15 bis 60 Gew.-%, bevorzugt 25 bis 60 Gew.-%, mehr bevorzugt 35 bis 55 Gew.-%, am meisten bevorzugt 45 bis 55 Gew.-%, einer Pfropfhülle (A2) und
      40 bis 85 Gew.-%, bevorzugt 40 bis 75 Gew.-%, mehr bevorzugt 45 bis 55 Gew.-%, eines Pfropfsubstrats - eines agglomerierten Butadienkautschuklatex - (A1), wobei sich (A1) und (A2) zu 100 Gew.-% summieren,

         erhalten durch Emulsionspolymerisation von
         Styrol und Acrylnitril in einem Gewichtsverhältnis von 95:5 bis 65:35, um eine Pfropfhülle (A2) zu erhalten, wobei Styrol und/oder Acrylnitril teilweise (weniger als 50 Gew.-%) durch alpha-Methylstyrol, Methylmethacrylat oder Maleinsäureanhydrid oder Mischungen davon ersetzt werden können,
         in Gegenwart von mindestens einem agglomerierten Butadien-Kautschuklatex (A1) mit einem gewichtsmittleren Teilchendurchmesser D50 von 150 bis 800 nm;
         wobei der agglomerierte Kautschuklatex (A1) durch Agglomeration von mindestens einem Ausgangs-Butadienkautschuklatex (S-A1) mit einem gewichtsmittleren Teilchendurchmesser D50 von 120 nm oder weniger mit mindestens einem Säureanhydrid, bevorzugt Essigsäureanhydrid oder Mischungen von Essigsäureanhydrid mit Essigsäure, insbesondere Essigsäureanhydrid, erhalten wird;

   (B) 40 bis 75 Gew.-% mindestens eines Copolymers (B) aus Styrol und Acrylnitril in einem Gewichtsverhältnis von 80:20 bis 65:35, bevorzugt 74:26 bis 68:32, wobei Styrol und/oder Acrylnitril teilweise (weniger als 50 Gew.-%) durch Methylmethacrylat, Maleinsäureanhydrid und/oder 4-Phenylstyrol ersetzt sein können;
   wobei Copolymer (B) eine gewichtsmittlere Molmasse Mw von 150.000 bis 300.000 g/mol, bevorzugt 180.000 bis 210.000 g/mol, aufweist;
   (C) 2,0 bis 5,0 Gew.-% mindestens eines elastomeren Blockcopolymers (C) hergestellt aus

      15 bis 65 Gew.-%, bezogen auf (C), mindestens eines Diens, bevorzugt Butadien, und
      35 bis 85 Gew.-%, bezogen auf (C), mindestens eines vinylaromatischen Monomers, bevorzugt Styrol,
      das Blockcopolymer C mindestens zwei Blöcke S, die polymerisierte Einheiten vinylaromatischen Monomers aufweisen, eine Glasübergangstemperatur Tg über 25°C haben und eine Hartphase bilden, und mindestens einen elastomeren Block B/S (Weichphase), der sowohl polymerisierte Einheiten vinylaromatischen Monomers als auch Diens enthält, eine statistische Struktur aufweist, eine Glasübergangstemperatur Tg von -50 bis +25°C hat und eine Weichphase bildet,
und der Anteil der aus den Blöcken S gebildeten Hartphase 5 bis 40 Vol.-%, bezogen auf das gesamte Blockcopolymer, beträgt, enthält;

(D) 2,0 bis 5,0 Gew.-% eines Titandioxidpigments D, enthaltend (bestehend aus) mindestens 95 Gew.-% Titandioxid (= Substrat) und 1,7 bis 3,3 Gew.-%, bevorzugt 2,0 bis 3,2 Gew.-%, mehr bevorzugt 2,8 bis 3,2 Gew.-%, Aluminiumoxid (= Beschichtung); und
(E) 0 bis 7,0 Gew.-% mindestens eines von (D) verschiedenen Additivs und/oder Verarbeitungshilfsmittels (E);
wobei die Summe der Komponenten (A), (B), (C), (D) und, falls vorhanden, (E) insgesamt 100 Gew.-% beträgt, und wobei der gewichtsmittlere Teilchendurchmesser D50 mit einer Scheibenzentrifuge bestimmt wird, die gewichtsmittlere Molmasse $M_w$ durch GPC mit UV-Detektion gemäß DIN 55672-1:2016-03 bestimmt wird, und die Glasübergangstemperatur Tg durch Differentialscanningkalorimetrie (DSC) gemäß DIN EN ISO 11357-2:2013 bestimmt wird.

2. Thermoplastische Formmasse gemäß Anspruch 1 enthaltend Komponenten A, B, C, D und E in den folgenden Mengen:

   (A): 20 bis 35 Gew.-%;
   (B): 52 bis 68 Gew.-%;
   (C): 2,0 bis 3,9 Gew.-%;
   (D): 3,0 bis 4,8 Gew.-%;
   (E): 0,1 bis 5,0 Gew.-%.

3. Thermoplastische Formmasse gemäß Anspruch 1 oder 2, umfassend die Komponenten A, B, C, D und E in den folgenden Mengen:

   (A): 26 bis 33 Gew.-%;
   (B): 55 bis 65 Gew.-%;
   (C): 2,2 bis 3,2 Gew.-%;
   (D): 3,5 bis 4,8 Gew.-%;
   (E): 0,1 bis 5,0 Gew.-%.

4. Thermoplastische Formmasse gemäß einem der Ansprüche 1 bis 3, wobei das Pfropfcopolymer (A) aus 35 bis 55 Gew.-%, bevorzugt 45 bis 55 Gew.-%, einer Pfropfhülle (A2) und 45 bis 65 Gew.-% einer Pfropfunterlage - einem agglomerierten Butadienkautschuklatex - (A1) besteht;

   das Pfropfcopolymer (A) zum Erhalt einer Pfropfhülle (A2) durch Emulsionspolymerisation von Styrol und Acrylnitril in einem Gewichtsverhältnis von 80:20 bis 65:35, bevorzugt 74:26 bis 70:30, erhalten wird;
   der Ausgangs-Butadienkautschuklatex (S-A1) aus 85 bis 98 Gew.-% Butadien und 2 bis 15 Gew.-% Styrol besteht.

5. Thermoplastische Formmasse gemäß einem der Ansprüche 1 bis 4, wobei der agglomerierte Kautschuklatex (A1) des Pfropfcopolymers (A) eine bimodale Teilchengrößenverteilung aufweist und ein Gemisch aus mindestens einem agglomerierten Kautschuklatex (A1-1) mit einem gewichtsmittleren Teilchendurchmesser D50 von 150 bis 350 nm, bevorzugt 200 bis 270 nm, und mindestens einem agglomerierten Kautschuklatex (A1-2) mit einem gewichtsmittleren Teilchendurchmesser D50 von 425 bis 650 nm, vorzugsweise 450 bis 550 nm, ist.

6. Thermoplastische Formmasse gemäß einem der Ansprüche 1 bis 5, wobei das Pfropfcopolymer (A) durch ein Verfahren hergestellt wird, enthaltend die Schritte:
   α) Synthese des Ausgangs-Butadienkautschuklatex (S-A1) durch Emulsionspolymerisation, β) Agglomeration des Latex (S-A1), um den agglomerierten Butadienkautschuklatex (A1) zu erhalten, γ) Pfropfen des agglomerierten Butadienkautschuklatex (A1), um ein Pfropfcopolymer (A) zu bilden, und δ) Koagulation des Pfropfcopolymers (A).

7. Thermoplastische Formmasse gemäß Anspruch 5, wobei im Koagulationsschritt δ) des Anspruchs 6 eine Metallsalzlösung, insbesondere $MgSO_4$, verwendet wird.

8. Thermoplastische Formmasse gemäß einem der Ansprüche 1 bis 7, wobei der Elastomerblock B/S des Blockcopolymers (C) aus 60 bis 30 Gew.-% vinylaromatischem Monomer, bevorzugt Styrol, und 40 bis 70 Gew.-% Dien, bevorzugt Butadien, aufgebaut ist.

9. Thermoplastische Formmasse gemäß einem der Ansprüche 1 bis 8, **dadurch gekennzeichnet, dass** das Blockcopolymer (C) aus 25 bis 39 Gew.-% Dien, insbesondere Butadien, und 75 bis 61 Gew.-% des vinylaromatischen Monomers, insbesondere Styrol, hergestellt ist.

10. Thermoplastische Formmasse gemäß einem der Ansprüche 1 bis 9, wobei Blockcopolymer (C) eines der allgemeinen Formeln S-(B/S)-S, X-[-(B/S)-S]$_2$ und Y-[-(B/S)-S]$_2$, insbesondere S-(B/S)-S ist, wobei X der Rest eines n-funktionellen Initiators, Y der Rest eines m-funktionellen Kopplungsmittels ist, m und n natürliche Zahlen von 1 bis 10 sind und S und B/S wie oben definiert sind.

11. Thermoplastische Formmasse gemäß einem der Ansprüche 1 bis 10, wobei das Titandioxidpigment (D) durch eine organische Behandlung modifiziert ist und hydrophile Eigenschaften aufweist.

12. Thermoplastische Formmasse gemäß einem der Ansprüche 1 bis 11, wobei das Titandioxidpigment (D) mindestens 96 Gew.-% Titandioxid und 2,0 bis 3,2 Gew.-%, bevorzugt 2,8 bis 3,2 Gew.-%, Aluminiumoxid enthält, vorausgesetzt, dass kein Siliciumdioxid vorhanden ist.

13. Thermoplastische Formmasse gemäß einem der Ansprüche 1 bis 12, wobei die Komponente (E) mindestens ein Gleitmittel, Antioxidant, Farbstoff und/oder Pigment, ausgenommen Weißpigmente, ist.

14. Verfahren zur Herstellung der thermoplastischen Formmasse gemäß einem der Ansprüche 1 bis 13 durch Mischen der Komponenten (A), (B), (C), (D) und, falls vorhanden, (E) in der Schmelze bei Temperaturen im Bereich von 160°C bis 300°C.

15. Verwendung der thermoplastischen Formmasse gemäß einem der Ansprüche 1 bis 13 zur Herstellung von Formkörpern, insbesondere plattenförmig extrudierten und/oder thermogeformten Artikeln.

16. Plattenförmig extrudierter und/oder thermogeformter Artikel hergestellt aus der thermoplastischen Formmasse gemäß einem der Ansprüche 1 bis 13.

17. Verwendung eines plattenförmig extrudierten und/oder thermogeformten Artikels gemäß Anspruch 16 für Anwendungen im Automobil- und Haushaltsbereich.

18. Verwendung eines plattenförmig extrudierten und/oder thermogeformten Artikels gemäß Anspruch 16 als Innenauskleidung in Kühlvorrichtungen.

**Revendications**

1. Composition de moulage thermoplastique comprenant les composants A, B, C, D et éventuellement E :

(A) 15 à 45% en poids d'au moins un copolymère greffé (A) consistant en 15 à 60% en poids, de préférence 25 à 60% en poids, plus préférablement 35 à 55% en poids, et encore plus préférablement 45 à 55% en poids d'une gaine greffée

40 à 85% en poids, de préférence 40 à 75% en poids, plus préférablement 45 à 55% en poids d'un substrat greffé -un latex de caoutchouc butadiène aggloméré- (A1), où (A1) et (A2) totalisent jusqu'à 100% en poids, obtenu par polymérisation en émulsion
de styrène et d'acrylonitrile dans un rapport pondéral de 95/5 à 65/35 pour obtenir une gaine greffée (A2), il étant possible de remplacer partiellement (pour moins que 50% en poids) le styrène et/ou l'acrylonitrile par de l'alpha-méthylstyrène, du méthacrylate de méthyle ou de l'anhydride maléique ou leurs mélanges, en présence d'au moins un latex de caoutchouc butadiène aggloméré (A1) ayant un diamètre de particules de poids médian D50 de 150 à 800 nm;
où le latex de caoutchouc aggloméré (A1) est obtenu par agglomération d'au moins un latex de caoutchouc butadiène de départ (S-A1) ayant un diamètre de particules de poids médian D50 égal ou inférieur à 120 nm, avec au moins un anhydride acide, de préférence de l'anhydride acétique, ou des mélanges d'anhydride acétique avec de l'acide acétique, en particulier de l'anhydride acétique,

(B) 40 à 75% en poids d'au moins un copolymère de styrène et d'acrylonitrile dans un rapport pondéral compris entre 80/20 et 65/35, de préférence 74/26 à 68/32, le styrène et/ou l'acrylonitrile pouvant être partiellement (pour moins de 50% en poids) remplacés par du méthacrylate de méthyle, de l'anhydride maléique et/ou du 4-phénylstyrène;

où le copolymère (B) a une masse molaire moyenne en poids Mw de 150000 à 300000 g/mol, de préférence de 180000 à 210000 g/mol ;

(C) 2,0 à 5,0% en poids d'au moins un copolymère bloc élastomère (C) formé de 15 à 65% en poids, par rapport au poids de (C), d'au moins un diène, de préférence le butadiène, et

35 à 85% en poids, exprimés par rapport au poids de (C), d'au moins un monomère vinylaromatique, de préférence du styrène,

lequel copolymère bloc C comprend

au moins deux séquences ou blocs S qui comportent des motifs polymérisés de monomère vinylaromatique, et présentent une température de transition vitreuse Tg supérieure à 25°C et forment une phase dure, et comportent au moins une séquence élastomère B/S (phase molle) qui contient à la fois des motifs polymérisés de monomère vinylaromatique et de diène, qui présentent une structure aléatoire, une température de transition vitreuse Tg comprise entre -50 et +25°C et forment une phase molle, et la proportion de phase dure formée à partir des blocs S représente de 5 à 40% en volume, sur la base du copolymère bloc total;

(D) 2,0 à 5,0% en poids d'un pigment de dioxyde de titane D (consistant en au moins 95% en poids de dioxyde de titane (= substrat) et 1,7 à 3,3% en poids, de préférence de 2,0 à 3,2% en poids, plus préférablement de 2,8 à 3,2% en poids d'alumine (= enrobage) ; et

(E) 0 à 7,0% en poids d'au moins un additif et/ou un auxiliaire de traitement (E) différent de celui utilisé dans (D); où la somme des composants (A), (B), (C), (D) et, le cas échéant, (E) totalise 100% en poids, et où le diamètre des particules de poids médian D50 est déterminé à l'aide d'une centrifugeuse à disque, la masse molaire moyenne en poids Mw est déterminée par GPC (chromatographie en phase gazeuse) avec détection UV conformément à la norme DIN 55672-1:2016-03, et la température de transition vitreuse Tg est déterminée par calorimétrie différentielle à balayage (DSC) selon DIN EN ISO 11357-2:2013.

2. Composition de moulage thermoplastique selon la revendication 1 comprenant les composants A, B, C, D et E dans les proportions suivantes:

(A) : 20 à 35% en poids,
(B) : 52 à 68% en poids,
(C) : 2,0 à 3,9% en poids,
(D) : 3,0 à 4,8% en poids,
(E): 0,1 à 5,0% en poids.

3. Composition de moulage thermoplastique selon la revendication 1 ou 2 comprenant des composants A, B, C, D et E dans les proportions suivantes:

(A): 26 à 33% en poids,
(B) : 55 à 65% en poids,
(C) : 2,2 à 3,2% en poids,
(D) : 3,5 à 4,8% en poids,
(E) : 0,1 à 5,0% en poids.

4. Composition de moulage thermoplastique selon l'une quelconque des revendications 1 à 3, dans laquelle le copolymère greffé (A) est constitué de 35 à 55% en poids, de préférence de 45 à 55% en poids, d'une greffon (A2) et de 45 à 65% en poids, d'un copolymère greffé substrat greffé - un copolymère greffé de latex de caoutchouc butadiène aggloméré -(A1) est obtenu par polymérisation en émulsion du styrène et de l'acrylonitrile dans un rapport pondéral de 80/20 à 65/35, de préférence de 74/26 à 70/30, pour obtenir un greffon (A2), et le latex de caoutchouc butadiène de départ (S-A1) est constitué de 85 à 98% en poids de butadiène et de 2 à 15% en poids de styrène.

5. Composition de moulage thermoplastique selon l'une quelconque des revendications 1 à 4, dans laquelle le latex de caoutchouc aggloméré (A1) du copolymère greffé (A) présente une distribution granulométrique bimodale et est un mélange d'au moins un latex de caoutchouc aggloméré (A1-1) ayant un diamètre de particules de poids médian $D_{50}$ de 150 à 350 nm, de préférence de 200 à 270 nm, et au moins un latex de caoutchouc aggloméré (A 1-2) ayant un diamètre de particules de poids médian $D_{50}$ de 425 à 650 nm, de préférence de 450 à 550 nm.

**6.** Composition de moulage thermoplastique selon l'une quelconque des revendications 1 à 5, dans laquelle le copolymère greffé (A) est préparé par un procédé comprenant les étapes suivantes:

$\alpha$) synthèse du latex de caoutchouc butadiène de départ (S-A1) par polymérisation en émulsion,
$\beta$) agglomération de latex (S-A1) pour obtenir le latex de caoutchouc butadiène aggloméré (A1),
$\gamma$) greffage du latex de caoutchouc butadiène aggloméré (A1 ) pour former un copolymère greffé (A) et
$\delta$) la coagulation du copolymère greffé (A).

**7.** Composition de moulage thermoplastique selon la revendication 5, dans laquelle est utilisée dans l'étape de coagulation $\delta$) de la revendication 6 une solution de sel métallique, en particulier de $MgSO_4$.

**8.** Composition de moulage thermoplastique selon l'une quelconque des revendications 1 à 7, dans laquelle le bloc élastomère B/S du copolymère bloc (C) est constitué de 60 à 30% en poids d'un monomère vinylaromatique, de préférence de styrène, et de 40 à 70% en poids de diène, de préférence de butadiène.

**9.** Composition de moulage thermoplastique selon l'une quelconque des revendications 1 à 8 dans laquelle le copolymère bloc (C) est constitué de 25 à 39% en poids de diène, en particulier de butadiène, et de 75 à 61% en poids d'un monomère vinylaromatique, en particulier de styrène.

**10.** Composition de moulage thermoplastique selon l'une quelconque des revendications 1 à 9, dans laquelle le copolymère bloc (C) et l'un de ceux de formules générales S-(B/S)-S, X-[-(B/S)-S]$_2$ et Y-[-(B/S)-S]$_2$, en particulier S-(B/S)-S, où X est le radical d'un initiateur n-fonctionnel, Y est le radical d'un agent de couplage m-fonctionnel, m et n étant des nombres entiers de 1 à 10, et S et B/S étant tels que définis ci-dessus.

**11.** Composition de moulage thermoplastique selon l'une quelconque des revendications 1 à 10, dans laquelle le pigment de dioxyde de titane (D) est modifié par un traitement organique et possède des propriétés hydrophiles.

**12.** Composition de moulage thermoplastique selon l'une quelconque des revendications 1 à 11, dans laquelle le pigment de dioxyde de titane (D) comprend au moins 96% en poids de dioxyde de titane et 2,0 à 3,2% en poids, plus préférentiellement 2,8 à 3,2% en poids d'alumine, à condition qu'il n'y ait pas de la silice présente.

**13.** Composition de moulage thermoplastique selon l'une quelconque des revendications 1 à 12, dans laquelle le composant (E) est au moins un lubrifiant, un antioxydant, un colorant et/ou un pigment, à l'exception des pigments blancs.

**14.** Procédé de préparation de la composition de moulage thermoplastique selon l'une quelconque des revendications 1 à 13, par mélange à l'état fondu des composants (A), (B), (C), (D), et, si présent, (E) à des températures comprises entre 160°C et 300 °C.

**15.** Utilisation de la composition de moulage thermoplastique selon l'une quelconque des revendications 1 à 13 pour la production d'articles façonnés, en particulier d'articles extrudés et/ou thermoformés.

**16.** Feuille extrudée et/ou article thermoformé faits à partir de la composition de moulage thermoplastique selon l'une quelconque des revendications 1 à 13.

**17.** Utilisation d'une feuille d'article extrudé et/ou thermoformé selon la revendication 16, pour des applications automobiles et domestiques.

**18.** Utilisation d'une feuille extrudée et/ou d'un article thermoformé selon la revendication 16, comme revêtement interne dans les appareils de refroidissement.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 200036010 A
- WO 2009004018 A
- WO 2017182435 A
- WO 2012022710 A
- WO 2014170406 A
- WO 2014170407 A
- WO 2012022710 A1
- DE 2420358 A
- DE 2724360 A
- WO 9535335 A
- US 3985830 A
- US 3280084 A
- US 3637554 A
- US 4091053 A
- WO 9740079 A
- WO 2012055919 A
- DE 19907136 A

### Non-patent literature cited in the description

- Polystyrol [Polystyrene. **VIEWEG ; DAUMILLER.** Kunststoff-Handbuch ([Plastics Handbook. Carl-Hanser-Verlag, 1969, vol. V, 122
- **J. BRANDRUP ; E. H. IMMERGUT.** Polymer Handbook. John Wiley
- **D. SMITH ; A. ASHRAF et al.** *Polymer Preprints,* 1993, vol. 34 (2), 672
- *POLYMER PREPRINTS,* 1994, vol. 35 (2), 466
- Plastics Additives Handbook. Hanser Publ, 1996
- *CHEMICAL ABSTRACTS,* 67701-06-8
- *CHEMICAL ABSTRACTS,* 9084-06-04
- *CHEMICAL ABSTRACTS,* 68610-51-5